# EUROPÄISCHE PATENTSCHRIFT

(11) **EP 4 381 204 B1**
(45) Veröffentlichungstag und Bekanntmachung des Hinweises auf die Patenterteilung: **24.06.2026**
(21) Anmeldenummer: 22761537.4
(22) Anmeldetag: 08.08.2022
(51) Int. Cl.: F16G 13/16

(54) **SYSTEM ZUR ABSTÜTZUNG EINER BEWEGLICHEN LEITUNGSAUFNAHMEEINRICHTUNG, ENERGIEFÜHRUNGSKETTE ODER DGL.**
SYSTEM FOR SUPPORTING A MOVABLE LINE-HOLDING DEVICE, ENERGY CHAIN OR THE LIKE
SYSTÈME DE SUPPORT D'UN DISPOSITIF DE RÉCEPTION DE LIGNE MOBILE, CHAÎNE PORTE-CÂBLES OU ANALOGUE

(30) Priorität: 06.08.2021 DE 202021104228 U
(43) Veröffentlichungstag der Anmeldung: 12.06.2024
(73) Patentinhaber: igus SE & Co. KG, 51147 Köln (DE)
(72) Erfinder: BARTEN, Dominik, 53340 Meckenheim (DE); HERMEY, Andreas, 53773 Hennef (DE); JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2022/072265
(87) Internationale Veröffentlichungsnummer: WO 2023/012373

(56) Entgegenhaltungen:
- WO-A1-2021/033682

## Beschreibung

Die Erfindung betrifft allgemein das Gebiet der dynamischen Leitungsführungseinreichungen, insbesondere der Energieführungskette.

Die Erfindung betrifft insbesondere ein System zur Abstützung eines Obertrums einer beweglichen Leitungsaufnahmeeinrichtung, insbesondere einer Energieführungskette.

Leitungsaufnahmeeinrichtungen, insbesondere Energieführungsketten, dienen typisch zum dynamischen Führen mindestens einer Leitung, wie z.B. eines Kabels, Schlauchs oder dergleichen, zwischen einer ersten Anschlussstelle an einem Festpunkt und einer dazu relativbeweglichen zweiten Anschlussstelle an einem Mitnehmer. Die Leitungsaufnahmeeinrichtung weist typischerweise ein mit der ersten Anschlussstelle verbindbares Untertrum und das Obertrum auf und das Obertrum ist meist mit der zweiten Anschlussstelle verbindbar. Das Obertrum und das Untertrum sind typischerweise über einen verfahrbaren Umlenkbogen miteinander verbunden und die Leitungsaufnahmeeinrichtung ist entlang eines Verfahrwegs verfahrbar. Beim Verfahren verläuft das Obertrum typischerweise oberhalb des Untertrums.

Ein gattungsgemäßes System zur Abstützung eines Obertrums einer Leitungsführungseinrichtung weist mindestens eine Stützeinheit auf, die zwei gegenüberliegende Stützvorrichtungen umfasst, wobei die Stützvorrichtungen jeweils ein Stützelement zur Abstützung des Obertrums von unten umfassen. Das Stützelement weist einen Stützkörper mit einer Gleitfläche und/oder eine Stützrolle mit einer Lauffläche auf. Das Stützelement ist zwischen einer Stützposition, in der das Stützelement als Abstützung des Obertrums von unten wirken kann, und einer Ausweichposition, in der das Stützelement nicht als Abstützung des Obertrums von unten wirken kann, verlagerbar.

Die Stützvorrichtungen weisen jeweils eine Kopplungseinrichtung auf, die das jeweilige Stützelement mit einem Aktuator koppelt, der eine Verlagerung des Stützelements von der Stützposition in die Ausweichposition und umgekehrt bewirkt. Weiterhin weist das System mindestens eine Sensorvorrichtung auf, welche berührungslos mit der Leitungsaufnahmeeinrichtung zusammenwirkt. Des Weiteren ist das System zur Steuerung des Aktuators in Abhängigkeit von Sensorsignalen der mindestens einen berührungslos wirkenden Sensorvorrichtung eingerichtet.

Ein derartiges System ist bereits bekannt. Eine Herausforderung bei diesen Systemen besteht darin, dass die Abstützung des Obertrums von unten so ausgelegt werden sollte, dass sie die Durchführung des Umlenkbogens beim Hin- und Herbewegen der Leitungsaufnahmeeinrichtung möglichst wenig beeinträchtigt.

Ein gattungsgemäßes System zur Abstützung einer beweglichen Leitungsaufnahmeeinrichtung der vorstehend beschriebenen Art ist aus der WO 2021/033682 A1 bekannt. Gemäß diesem Dokument dient es zur Unterstützung des Obertrums einer in horizontaler Richtung kreisbogenförmig geführten Leitungsaufnahmeeinrichtung. Die beiden jeweils eine Stützeinheit bildenden Stützvorrichtungen sind in horizontaler Richtung quer zur bogenförmigen Verfahrrichtung der Leitungsaufnahmeeinrichtung mit ihren Stützelementen aufeinander zu und voneinander weg bewegbar, wobei die Bewegung von einem Motor angetrieben wird, der an einem sich horizontal oberhalb des Obertrums der Leitungsaufnahmeeinrichtung erstreckenden Rahmen angeordnet ist. Über ein mit dem Motor verbundenes Getriebe werden zwei parallel zum Rahmen angeordnete Wellen angetrieben, die über jeweils an ihren Enden angeordnete Aktuatoren die Stützvorrichtungen simultan in Bewegung setzen. Zur Vermeidung von Beschädigungen der Stützrollen und ihrer Lagerung an den Stützvorrichtungen sowie des Umlenkbogens der Leitungsaufnahmeeinrichtung bei einer eventuellen Kollision mit dem Umlenkbogen in den Ausweichpositionen der Stützrollen, sind diese in einer horizontalen Ebene verschwenkbar an den Stützvorrichtungen angeordnet, sodass bei einer solchen Kollision in der Verfahrrichtung der Leitungsaufnahmeeinrichtung die Stützrollen verschwenkbar sind. Das System beansprucht aufgrund der mit den Stützrollen verlagerbaren Stützvorrichtungen verhältnismäßig viel Raum und ist zu einer stabilen Führung des Obertrums und Umlenkbogens bei Leitungsaufnahmeeinrichtungen mit größerem seitlichen Bewegungsspiel wenig geeignet.

Die in der US 4,129,277 A1 gezeigte Vorrichtung weist zur Schaffung eines besonders einfachen Systems und zur Vergrößerung der freitragenden Reichweite der Leitungsaufnahmeeinrichtung L-förmige Träger mit einem langen Schenkel und einem kurzen Schenkel auf, die um eine Achse im Bereich des Übergangs zwischen den beiden Schenkeln quer zur Längsrichtung der Leitungsaufnahmeeinrichtung verschwenkbar angeordnet sind. An den freien Enden der langen Schenkel sind an der zu dem jeweiligen kurzen Schenkel weisenden Seite Rollen gelagert, die eine Lauffläche zur Abstützung des Obertrums der Leitungsaufnahmeeinrichtung und an der zum langen Schenkel hinweisenden Seite ein Flanschteil zur seitlichen Führung des Obertrums aufweisen. Aus einer nach außen gekippten Position der L-förmigen Träger, in der sie die Bewegung der Leitungsaufnahmeeinrichtung zwischen ihnen hindurch nicht behindern, werden die Träger durch Auflage des Untertrums auf die aufeinander zuweisenden kurzen Schenkel in eine Position aufgerichtet, in der die Rollen zur Abstützung und Führung des Obertrums wirken können.

Bei der EP 2 419 981 B1 sorgt ein Schaltkörper mit geneigten Kontaktflächen bei Kontakt mit innen oder außen liegenden Bereichen des Umlenkbogens dafür, dass eine Rolle aus dem Verfahrweg der Leitungsaufnahmeeinrichtung und ihres Umlenkbogens heraus verlagert wird und die Zurückverlagerung erfolgt mittels Federkraft und Gewichtskraft. Dieses System und diese Feder-Stützvorrichtung haben sich insbesondere in abrasiver Umgebung sehr bewährt. Beispielsweise wird durch Vermeiden des Gleitens der Trume aufeinander verhindert, dass sich Späne zwischen den Trumen festsetzen. Nachteilig an diesem System und dieser Feder-Stützvorrichtung ist, dass sie für bestimmte Umgebungen und Einsatzgebiete nicht in wünschenswertem Maße geeignet sind.

Ein weiteres System zur Führung von Energieführungsketten wird in der DE 2362463 A1 beschrieben. Die DE 2362463 A1 beschreibt ein System bei welchem das ruhende Trum entlang seiner freitragenden Länge von Kettengreifern unterstützt wird. Die Kettengreifer werden von der Energieführungskette selbst gesteuert bzw. betätigt. Die Steuerung des Wechsels zwischen einer Stütz- bzw. Ausweichposition der Kettengreifer geschieht insbesondere über Taster und/oder Schalter, welche mechanisch durch Berührung der Energieführungskette betätigt werden.

Der vorliegenden Erfindung liegt die Aufgabe zugrunde, eine Lösung für ein System zur Abstützung des Obertrums einer Leitungsaufnahmeeinrichtung vorzuschlagen, welches hinsichtlich zumindest eines der genannten Nachteile verbessert ist oder erweiterte Einsatzmöglichkeiten aufweist.

Diese Aufgabe wird durch das in Anspruch 1 wiedergegebene System gelöst.

Bei einem gattungsgemäßen System nach dem Oberbegriff aus Anspruch 1 wird die Aufgabe erfindungsgemäß bereits dadurch gelöst, dass die Stützvorrichtungen jeweils eine eigene aktive Verlagerungsvorrichtung umfassen, die einen Aktuator zur Verlagerung des Stützelements von der Stützposition in die Ausweichposition und umgekehrt aufweist.

Das System wird hierdurch u.a. auch in besonders sauberer Umgebung, insbesondere in Reinräumen, bzw. in Anwendungen einsetzbar wo es in besonderem Maße auf die Vermeidung von durch das System hervorgerufenem Abrieb ankommt. Besonders vorteilhaft ist die Kombination einer aktiven Betätigung bzw. Verlagerung der Stützelemente mit berührungsloser Sensorik. Dadurch wird erreicht, dass die Stützelemente bei jeder Stützvorrichtung gerade nicht durch berührenden Kontakt mit der Leitungsaufnahmeeinrichtung bzw. Energieführungskette verstellt werden müssen. Im Gegensatz zu verschiedenen aus dem vorgenannten Stand der Technik bekannten Lösungen wird somit jeglicher Verschleiß durch Reibung beim Verstellen und/oder Betätigen vermieden.

Bevorzugt weist das System keine aufeinander abgleitenden Flächen auf.

Bevorzugt vermeidet das System im bestimmungsgemäßen Betrieb mit funktionierender aktiver Verlagerungsvorrichtung, dass die Leitungsaufnahmeeinrichtung bzw. insbesondere der Umlenkbogen mittels aufeinander abgleitenden Flächen die Verlagerung des Stützelements bewirkt. Zudem hat sich eine besonders gute Einsetzbarkeit des erfindungsgemäßen Systems in Anwendungen mit bestimmungsgemäß sehr schnell, z.B. etwa schneller als 5 m/s oder 10 m/s oder 15 m/s, verfahrenden Leitungsaufnahmeeinrichtungen gezeigt.

Mit dem Begriff "Verlagern" ist vorliegend insbesondere ein Bewegen von einer Stelle an eine andere Stelle gemeint, wobei es auf die Art der Bewegung nicht ankommt. Das Verlagern kann z.B. durch eine Schwenk- bzw. Drehbewegung, translatorische Bewegung oder auch eine kombiniert translatorisch-rotatorische Bewegung erfolgen. Die Eigenschaft "verlagerbar" wird somit vorliegend allgemein insbesondere im Sinne von beweglich bzw. verstellbar bzw. positionierbar verstanden.

Grundsätzlich ist denkbar, dass die Stützvorrichtung mehrere Stützelemente umfasst. Bevorzugt umfasst die Stützvorrichtung jedoch genau ein Stützelement.

Bevorzugt weist die Gleitfläche und/oder die Lauffläche nach oben und ist insbesondere von oben frei zugänglich.

Die Leitungsaufnahmeeinrichtung ist insbesondere eine bestimmungsgemäß bewegliche Einrichtung zum dynamischen Führen von Leitungen, Schläuchen oder dgl.

Bei der Leitungsaufnahmeeinrichtung kann es sich insbesondere aber nicht notwendigerweise um eine Energieführungskette zur Aufnahme von Leitungen, Schläuchen oder dgl. handeln, bei denen benachbarte Glieder gelenkig miteinander verbunden sind. Die Leitungsaufnahmeeinrichtung kann auch z.B. eine Bandkette sein, bei der Glieder über ein biegsames Band miteinander verbunden sind, oder eine andere in mindestens einer Ebene abwinkelbare Einrichtung zur Aufnahme von Leitungen. Auch andere, nicht gliederartige Leitungsaufnahmeeinrichtungen kommen in Betracht, z.B. in der Bauart nach WO 2016/042134 A1.

Mit dem Begriff "Ausweichposition" ist vorliegend insbesondere eine Position des Stützelements gemeint, in der der Umlenkbogen an dem Stützelement vorbeifahren kann. Vorzugsweise ragt das Stützelement in der Ausweichposition nicht in den Verfahrweg der Leitungsaufnahmeeinrichtung und ihres Umlenkbogens hinein.

Das Stützelement stützt das Obertrum bevorzugt nicht andauernd, sondern nur zeitweise ab.

Die Leitungsaufnahmeeinrichtung weist bevorzugt ein ruhendes und ein bewegliches Trum auf und das Untertrum ist bevorzugt das ruhende Trum und das Obertrum ist bevorzugt das bewegliche Trum.

Das Stützelement umfasst bzw. ist bevorzugt zur Reibungsminderung eine Stützrolle, welche bevorzugt um eine um eine horizontale Drehachse drehbar ist.

Wenn das Stützelement einen Stützkörper mit einer Gleitfläche aufweist, dann kann die Gleitfläche eine horizontal verlaufende Abflachung aufweisen oder hierdurch gebildet sein. Zur Vermeidung eines Verhakens der über die Gleitfläche gleitenden Leitungsaufnahmeeinrichtung mit der Gleitfläche können an der Gleitfläche Anlaufabschrägungen angeordnet sein, die gegenüber der Gleitfläche um eine horizontale Achse abgewinkelt sein können.

Bevorzugt ist jedem Stützelement ein eigener Aktuator zugeordnet.

In einer Ausführungsform ist der Aktuator mittels einer dem System übergeordneten Anlagen- oder Maschinensteuerung, beispielsweise einer SPS (englisch: "Programmable Logic Controller, PLC") steuerbar, etwa anhand von Information über die Position des Mitnehmers. Die Anlagen- oder Maschinensteuerung bezeichnet hierbei diejenige Steuerung, welche die Bewegung der beweglichen Leitungsaufnahmeeinrichtung steuert, beispielsweise mittelbar, durch Steuerung der Bewegung des Mitnehmers, und daher inhärent über Information zu deren momentanen Raumlage bzw. aktuellen Position verfügt. Hierdurch ist eine Voraussetzung dafür geschaffen, dass das System ohne eigene Steuereinheit und/oder eigene Sensoren auskommen kann.

In einer bevorzugten Ausführungsform umfasst das System jedoch selbst mindestens eine eigene Steuereinheit zur Steuerung des Aktuators, in Abhängigkeit von den Sensorsignalen der zumindest einen Sensorvorrichtung. Hierdurch ist eine Voraussetzung dafür geschaffen, dass das System, wie bevorzugt, eigenständig ist, also nicht auf Sensor- und/oder Steuersignale einer übergeordneten Maschinensteuerung angewiesen ist.

Dabei ist denkbar, dass das System genau eine Steuereinheit aufweist.

Zudem ist denkbar, dass das System eine übergeordnete, gemeinsame Steuereinheit aufweist.

Die Steuereinheit kann mit mehreren Aktuatoren zusammenwirken, welche z.B. über einen Bus signaltechnisch mit der gemeinsamen Steuereinheit verbunden sind.

Bevorzugt ist jedoch jeder Stützeinheit eine eigene Steuereinheit zugeordnet. Bevorzugt wirkt also genau eine Steuereinheit mit genau einer Stützeinheit zusammen. Besonders bevorzugt ist jedem Aktuator eine eigene Steuereinheit zugeordnet. Bevorzugt wirkt also genau eine Steuereinheit mit genau einem Aktuator zusammen.

Bevorzugt weist der Aktuator einen Eingang zum Empfang von Steuersignalen auf und dieser Eingang ist mit der Steuereinheit verbindbar oder verbunden.

Bevorzugt hat das System mindestens eine Sensorvorrichtung, vorzugsweise zur Erfassung der momentanen Lage der beweglichen Leitungsaufnahmeeinrichtung im Betrieb. Wenn das System mindestens eine Sensorvorrichtung aufweist, dann ist eine Voraussetzung dafür geschaffen, dass das System, wie bevorzugt, eigenständig ist, also nicht auf Sensor- und/oder Steuersignale einer übergeordneten Maschinensteuerung angewiesen ist. Das System kann somit bevorzugt autark ausgeführt sein, was ein Nachrüsten in bestehende Anwendungen erleichtert.

Die Sensorvorrichtung dient bevorzugt der Ermittlung der Position des Umlenkbogens und/oder des Untertrums. Das System kann mindestens zwei oder mehr Sensorvorrichtungen umfassen.

Die Steuereinheit umfasst bevorzugt eine Auswerteeinheit. Diese ist bevorzugt zur Auswertung der von dem mindestens einen Sensor bzw. den Sensoren erhaltenen Signalen eingerichtet.

Bevorzugt ist das System autark bzw. dazu eingerichtet, eigenständig zu sein oder betrieben zu werden, insbesondere unabhängig von Sensor- und/oder Steuersignalen der übergeordneten Anlagen- oder Maschinensteuerung. Bevorzugt ist jeder Daten- oder Signaleingang von Komponenten des Systems, etwa des Aktuators, mit einer Komponente des Systems, etwa einer Steuereinheit des Systems, verbunden oder verbindbar.

Die Steuereinheit bzw. deren Auswerteeinheit weist bevorzugt mindestens einen Eingang auf, der mit mindestens einer der mindestens einen Sensorvorrichtung wirkverbunden ist. Mit dem Begriff "wirkverbunden" ist insbesondere eine Verbindung mittels elektrischer Leitung, etwa einer Signalleitung und/oder per Funk gemeint.

Die Steuereinheit weist bevorzugt mindestens einen Ausgang auf, der mit mindestens einem des mindestens einen steuerbaren Aktuators wirkverbunden ist.

Bei einer Vielzahl von Sensoren und insbesondere in der Ausführungsform mit einer zentralen bzw. gemeinsamen Steuereinheit kann jeder der Sensoren zur Kommunikation über einen Bus, z.B. Feld-Bus, vorzugsweise in Linien-Topologie (seriell) und insbesondere in Zweidraht-Technik, wie beispielsweise ASI-Bus oder CAN-Bus mit der Auswerteeinheit oder einem oder mehreren zwischengeschalteten Bus-Schnittstellenmodulen, Bus-Kopplern oder dgl. verdrahtet sein. Es kommen auch andere Bustypen, z.B. nach Norm IEC 61158, wie Interbus oder Profibus, in Betracht. Insbesondere bei serieller Zwei-Draht-Technik wird der Verkabelungsaufwand so gering wie möglich gehalten. Vorzugsweise werden die Sensoren über den Bus elektrisch mit Energie versorgt. Denkbar ist auch eine drahtlos-Schnittstelle, wie Wi-Fi, über welche die Sensoren mit der Auswerteeinheit kommunizieren. Die drahtlose Variante kann die Installation des Systems vor Ort besonders vereinfachen. Die Sensoren können entlang einer Seite der Leitungsaufnahmeeinrichtung oder aber beidseitig, z.B. paarweise oder alternierend, verteilt sein.

Insbesondere in der Ausführungsform, in der jedem Aktuator eine eigene Steuereinheit zugeordnet ist, wirkt die Steuereinheit bevorzugt jeweils mit zwei Sensorvorrichtungen zusammen. Hierdurch kann eine Voraussetzung für ein einfaches und dennoch zuverlässiges System geschaffen sein, und es kann auf einen Bus verzichtet werden. Es wird damit die Installation, insbesondere das Nachrüsten bestehender Anwendungen, erleichtert.

Bevorzugt wirkt die Steuereinheit jeweils mit genau zwei Sensorvorrichtungen zusammen, die auf verschiedenen Seiten einer zumindest in etwa vertikale Ebene angeordnet sind. Bevorzugt ist diese vertikale Ebene so angeordnet, dass in ihr die Verlagerungsrichtung des Stützelements liegt, zu dessen Verlagerung der Aktuator, dem die Steuereinheit zugeordnet ist, dient. Mit dem Begriff "Verlagerungsrichtung des Stützelements" ist im Rahmen dieser Druckschrift insbesondere die Bewegungsrichtung dieses Elements zwischen seiner Stützposition und seiner Ausweichposition gemeint. In der Ausführungsform, in der das Stützelement eine Stützrolle umfasst, ist diese vertikale Ebene bevorzugt so angeordnet, dass in ihr die Drehachse der Stützrolle des Stützelements liegt, zu dessen Verlagerung der Aktuator, dem die Steuereinheit zugeordnet ist, dient.

Bevorzugt ist der Abstand der Sensorvorrichtung zu dem Stützelement in Abhängigkeit von der Fahrgeschwindigkeit der Leitungsaufnahmeeinrichtung gewählt. Bevorzugt ist der Abstand der Sensorvorrichtung zu dem Stützelement bei Anwendungen mit bestimmungsgemäß sehr schnell, z.B. etwa schneller als 5 m/s oder 10 m/s oder 15 m/s, verfahrenden Leitungsaufnahmeeinrichtungen größer gewählt, als bei Anwendungen mit bestimmungsgemäß nicht sehr schnell verfahrenden Leitungsaufnahmeeinrichtungen.

Vorzugsweise ist der Abstand der Sensorvorrichtung zu dem Stützelement kleiner als der halbe Abstand zweier benachbarter Stützeinheiten zueinander.

Die Steuereinheit kann jeweils, für jedes Stützelement, mit mindestens zwei Sensorvorrichtungen, insbesondere mit genau zwei Sensorvorrichtungen zusammenwirken. Die Steuereinheit kann jeweils mit genau einer auf der der ersten Anschlussstelle abgewandten Seite des Stützelements angeordneten Sensorvorrichtung und mit genau einer auf der der ersten Anschlussstelle zugewandten Seite des Stützelements angeordneten Sensorvorrichtung zusammenwirken.

Bevorzugt umfasst die Sensorvorrichtung einen Sensor, wobei der Sensor einen Detektionsbereich aufweist. Bevorzugt erfasst der Sensor die Anwesenheit oder Abwesenheit der Leitungsaufnahmeeinrichtung, insbesondere des Untertrums in seinem Detektionsbereich. Bevorzugt umfasst die Sensorvorrichtung einen einzigen Sensor, bzw. Detektor oder dgl. Die Sensorvorrichtung kann zusätzlich zu dem Detektor einen Emitter und/oder einen Reflektor umfassen. Alternativ kann sie aus genau einem Sensor gebildet sein. Die Sensorvorrichtung kann zum Erfassen der Position zumindest eines Abschnitts der Leitungsaufnahmeeinrichtung in Bezug auf einen Verfahrweg entlang der Längsrichtung der Leitungsaufnahmeeinrichtung eingerichtet sein. Es ist denkbar, dass die Sensorvorrichtungen eine Erkennungsstrecke entlang des Verfahrwegs bilden. Die mindestens eine Sensorvorrichtung kann z.B. die Position des Umlenkbogens erfassen oder Daten und/oder Signale zu deren Erfassung bereitstellen. Alternativ kann eine Sensorvorrichtung die Position des beweglichen Endes der Leitungsaufnahmeeinrichtung erfassen. Eine Sensorvorrichtung kann insbesondere eine Änderung der Verfahrensrichtung des beweglichen Endes der Leitungsaufnahmeeinrichtung erfassen.

Die bzw. jede Sensorvorrichtung wirkt vorzugsweise berührungslos, insbesondere also ohne einen berührenden Kontakt zu der Leitungsaufnahmeeinrichtung. Die Sensorvorrichtung kann z.B. einen Näherungsschalter umfassen oder hierdurch gebildet sein. Die Sensorvorrichtung kann einen optischen Näherungsschalter, vorzugsweise Lichttaster umfassen, also einen optischen Sensor, bei welchem der Emitter und Detektor in einer Einheit integriert ist und vorzugsweise kein Reflektor an dem zu detektierenden Objekt erforderlich ist. Auch Einweg-Lichtschranken mit von dem Emitter getrenntem Detektor oder Reflexions-Lichtschranken mit zusätzlichem Reflektor kommen als optische Näherungsschalter in Betracht. Eine denkbare Alternative hierzu sind kapazitive Näherungsschalter, die berührungslos mit der Leitungsaufnahmeeinrichtung zusammenwirken können. Im Rahmen der Erfindung liegen auch andere berührungslose Näherungsschalter, wie z.B. induktive Näherungsschalter, Reed-Schaltkontakte oder Hall-Geber usw.

In einer Ausführungsform kann die Sensorvorrichtung direkt oder indirekt berührend wirken. Sie umfasst dabei beispielsweise einen Drucksensor zur Erfassung der Gewichtskraft der Leitungsaufnahmeeinrichtung. Bevorzugt wirkt die Sensorvorrichtung ausschließlich mit dem unteren Trum zusammen.

Wenn eine Baugruppe vorgesehen ist, die eine Steuereinheit und zwei Sensorvorrichtungen umfasst und eine Stützvorrichtung mit einem Stützelement und einem Aktuator und die Steuereinheit so eingerichtet ist, dass sie den Aktuator ausschließlich in Abhängigkeit der Signale der beiden Sensorvorrichtungen steuert, dann ist eine Voraussetzung für eine modulares System geschaffen, das besonders einfach an unterschiedlichen Längen von Leitungsaufnahmeeinrichtungen anpassbar ist und das durch Austausch der Baugruppe im Fehlerfalle einfach reparierbar sein kann. Zudem ist erneut eine Voraussetzung dafür geschaffen, dass das System, wie bevorzugt, eigenständig ist, also nicht auf Sensor- und/oder Steuersignale einer übergeordneten Maschinensteuerung angewiesen ist. Bevorzugt liegen die Sensorvorrichtungen der Baugruppe bezogen auf eine zumindest in etwa vertikale Ebene einander gegenüber. Die vertikale Ebene ist bevorzugt so angeordnet, dass in ihr die Verlagerungsrichtung des Stützelements der Baugruppe und/oder die Drehachse der Stützrolle des Stützelements der Baugruppe liegt.

Bevorzugt bewirkt der Aktuator eine Bewegung und umfasst weiter bevorzugt einen elektrischen Rotationsmotor. Der elektrischen Rotationsmotor kann einen Schrittmotor oder einen Servomotor umfassen. Alternativ kann der Aktuator einen elektronischen Hubmagneten bzw. einen elektrischen Linearmotor umfassen. Denkbar ist auch ein pneumatischer Hubantrieb oder dergleichen.

Bevorzugt weist die Stützvorrichtung eine Tragstruktur zur Aufnahme von auf die Gleitfläche und/oder die Lauffläche insbesondere durch das Obertrum vertikal von oben nach unten aufgebrachten Kräften auf. Bevorzugt handelt es sich bei diesen Kräften um die Gewichtskraft des Obertrums.

Die Stützvorrichtung, insbesondere die Tragstruktur, kann eine Führungswand aufweisen, die zur seitlichen Führung der Leitungsaufnahmeeinrichtung dienen kann und als Seitenwand ausgeführt sein kann. Die Führungswand kann sich parallel zur Verfahrrichtung der Leitungsaufnahmeeinrichtung erstrecken. Bevorzugt ist die Führungswand vertikal feststehend ausgebildet. Bevorzugt verläuft die Drehachse der zugehörigen Stützrolle, zumindest in der Stützposition des Stützelements, senkrecht zu der Führungswand. Bevorzugt verläuft die Drehachse der zugehörigen Stützrolle, zumindest in der Ausweichposition des Stützelements, schräg zu der Führungswand.

Die Führungswand kann zur seitlichen Führung insbesondere des Obertrums der Leitungsaufnahmeeinrichtung eine Führungsfläche zur Anlage seitlicher Bereiche des Obertrums und/oder Untertrums aufweisen. Die Führungsfläche kann als Seitenfläche ausgebildet sein. Die Führungswand kann plattenförmig ausgebildet sein. Die Führungswand kann eine Öffnung für das Stützelement aufweisen.

An der Führungswand können zwei bevorzugt plattenförmige Stützwände abgewinkelt zur Führungswand angeordnet sein. Die Stützwände können seitlich der Öffnung angeordnet sein und sich quer zur Verfahrrichtung der Leitungsaufnahmeeinrichtung erstrecken. Die Führungswand kann sich zwischen den Stützwänden erstrecken. Die Führungswand kann durch geneigte oder gekrümmte Bereiche in die Stützwände übergehen.

Die Führungswand kann mit den Stützwänden einen etwa U-förmigen horizontalen Querschnitt ausbilden und die Steuereinheit und/oder der Aktuator kann innerhalb dieses U-förmigen Querschnitts angeordnet sein. Durch die Ausbildung des U-förmigen Querschnitts kann die Stabilität der Stützvorrichtung erhöht sein und durch die Anordnung des Aktuators und/oder der Steuereinheit im Inneren dieses Querschnitts kann dieser bzw. diese vor äußeren Einflüssen gut geschützt und dennoch leicht zugänglich sein.

Bevorzugt umfasst die Stützvorrichtung mindestens einen mittels eines Drehlagers schwenkbar gelagerten Schwenkarm. Weiter bevorzugt ist das Stützelement an dem Schwenkarm angeordnet. Das Stützelement kann unmittelbar an dem Schwenkarm angeordnet sein, oder mittelbar, etwa mittels einer Halterung. Die Halterung kann einen plattenförmigen Bereich aufweisen.

Der Schwenkarm kann Teil der Tragstruktur sein, also zur Aufnahme von auf die Gleitfläche und/oder die Lauffläche insbesondere durch das Obertrum vertikal von oben nach unten aufgebrachten Kräften dienen.

Der Schwenkarm kann unterhalb des Stützelements gelagert sein. Der Schwenkarm kann Teil der Kopplungseinrichtung sein oder diese bilden. Das Drehlager kann an den Stützwänden angeordnet sein.

Bevorzugt weist jede Stützvorrichtung zwei Schwenkarme auf und das Stützelement ist an beiden Schwenkarmen, vorzugsweise zwischen den beiden Schwenkarmen, angeordnet.

Wenn das Drehlager ein Wälzlager umfasst, dann kann die Eignung des Systems für besonders saubere Umgebung, wo es in besonderem Maße auf die Vermeidung von durch das System hervorgerufenem Abrieb ankommt, nochmals gesteigert sein. Das Wälzlager kann als Kugellager ausgebildet sein.

Das Stützelement und/oder die Halterung, mittels der das Stützelement an dem Schwenkarm angeordnet ist, kann sich in der Stützposition durch die Öffnung der Führungswand der Stützvorrichtung erstrecken.

Die Leibung der Öffnung kann einen Anschlag für das Stützelement und/oder die Halterung und/oder den mindestens einen Schwenkarm bereitstellen, der die Stützposition des Stützelements definiert. Der Anschlag kann eine Begrenzung des Verschwenkwinkels des mindestens einen Schwenkarms bewirken.

Bevorzugt umfasst die aktive Verlagerungsvorrichtung ein Federelement, das entgegen der Richtung einer durch den Aktuator bewirkten Bewegung wirkt.

Hierdurch kann in besonders zuverlässiger Weise ein Aktuator zum Einsatz kommen, der Energie in Bewegung in genau eine lineare Richtung oder genau eine Rotationsrichtung umwandelt. Zudem kann die Steuerung des Aktuators vereinfacht sein.

Vorzugsweise umfasst das Federelement eine Zugfeder oder ist hierdurch gebildet.

Vorzugsweise umfasst das Federelement eine Schraubenfeder oder ist hierdurch gebildet.

Die Ausbildung des Federelements der Stützvorrichtung als Zugfeder bzw. als Schraubenfeder und nicht etwa als sich an einer Wand gleitend abstützenden Stab-Biegefeder wie bei der EP 2 419 981 B1, hat insbesondere den Vorteil, dass sie Abrieb vermeidet oder verhindert.

Bevorzugt wirkt das Federelement zwischen einem Federlager der Stützvorrichtung und dem Schwenkarm oder einem mit dem Schwenkarm fest verbundenem weiteren Schwenkarm. Der Schwenkarm und der weitere Schwenkarm können zusammen einen Winkelhebel bilden. Das Federlager kann an der Stützwand oder der Führungswand oder dem Boden der Stützvorrichtung angeordnet sein. Der weitere Schwenkarm stellt bevorzugt einen Hebelvorsprung zur Bewirkung einer Hebelwirkung für das Federelement bereit. Das Federlager kann einen Vorsprung umfassen oder hierdurch gebildet sein. Das Federlager kann eine Bohrung, etwa in der Tragstruktur, umfassen oder hierdurch gebildet sein. Das Federelement kann in das Federlager eingehakt sein. Bevorzugt sind Federkontaktflächen an dem Federlager und an dem Schwenkarm oder dem weiteren Schwenkarm vorgesehen, zur Übertragung der Federkraft. Die Federkontaktflächen sind bevorzugt als Haftreibungsflächen und/oder als Rollreibungsflächen ausgebildet. Indem an den Federkontaktflächen bevorzugt Haftreibung und/oder Rollreibung, aber keine Gleitreibung auftritt, kann Abrieb reduziert sein. Die Stützvorrichtung weist bevorzugt zwei Schwenkarme auf. In der Ausführungsform, in der die Stützvorrichtung zwei Schwenkarme umfasst, kann sie zwei Federelemente aufweisen oder nur genau ein Federelement. Wenn zusätzlich zu der aktiven Verlagerungsvorrichtung eine passive Verlagerungsvorrichtung vorgesehen ist, dann kann eine besondere Zuverlässigkeit des Systems erreicht werden. Bevorzugt umfasst die Stützvorrichtung die passive Verlagerungsvorrichtung. Die passive Verlagerungsvorrichtung kann Bestandteile der aktiven Verlagerungsvorrichtung nutzen. Bevorzugt ist durch die passive Verlagerungsvorrichtung die Bewegung des Stützelements zwischen der Stützposition und der Ausweichposition auch dann gewährleistet, wenn die aktive Verlagerungsvorrichtung, etwa aufgrund eines Sensorfehlers, zumindest teilweise ausfallen sollte.

Bevorzugt umfasst die passive Verlagerungsvorrichtung eine in den Verfahrweg der Leitungsaufnahmeeinrichtung hinein bewegbare Schaltvorrichtung, vorzugsweise in Form eines Schaltkörpers. Der Schaltkörper kann Anlaufflächen, insbesondere Anlaufschrägen, aufweisen, vorzugsweise zwei einander entgegengesetzte, die bevorzugt mit dem Umlenkbogen insbesondere im Falle eines Versagens der aktiven Verlagerungsvorrichtung durch Kontakt mit innen und außenliegenden Bereichen des Umlenkbogen zusammenwirken können, um den Schaltkörper aus dem Verfahrweg der Leitungsaufnahmeeinrichtung heraus zu bewegen. Bevorzugt ist der Schaltkörper mit dem Stützelement so gekoppelt, dass dieses von seiner Stützposition in die Ausweichposition verlagert wird, wenn der Schaltkörper aus dem Verfahrweg der Leitungsaufnahmeeinrichtung heraus bewegt wird. In einer bevorzugten Ausführungsform ist der Schaltkörper durch seine Schwerkraft und/oder durch Federkraft in den Verfahrweg der Leitungsaufnahmeeinrichtung hinein bewegbar und vorzugsweise so mit dem Stützelement gekoppelt, dass dieses hierbei von seiner Ausweichposition in die Stützposition verlagert wird. Bevorzugt ist das Stützelement an der Schaltvorrichtung angeordnet. Hierdurch wird eine einfache, die Koppelung zwischen Schaltungs- und Stützelement bewirkende Konstruktion erzielt. Der Schaltkörper kann als ein teilweise um den Umfang der Stützrolle angeordnetes Gehäuse ausgebildet sein. Das Gehäuse kann im Bereich einer Stirnseite der Rolle offen sein und über diese Stirnseite vorstehen.

Der Schaltkörper ist bevorzugt um eine Schwenkachse schwenkbar gelagert, vorzugsweise außerhalb der inneren Seitenfläche der betreffenden Führungswand und weiter bevorzugt an demselben Schwenkarm oder denselben Schwenkarmen wie das Stützelement.

Bevorzugt ist die Schwerpunktlage des Schaltkörpers insbesondere in der Position, die er einnimmt, wenn das Stützelement in seiner Ausweichposition ist, relativ zur Schwenkachse derart, dass der Schaltkörper durch sein Gewicht alleine und/oder durch eine gegebenenfalls unterstützende Federkraft in den Verfahrweg der Leitungsaufnahmeeinrichtung hinein verschwenkt wird, wenn er von der Leitungsaufnahmeeinrichtung nicht kontaktiert wird.

Die Federkraft wird bevorzugt durch ein Federelement bewirkt, das eine Zugfeder umfassen kann, die als Schraubenfeder ausgeführt sein kann.

Die Federkraft kann durch dasselbe Federelement bewirkt werden, das entgegen der Richtung einer durch den Aktuator erzeugten Bewegung und/oder der Verlagerungsrichtung des Stützelements wirkt.

Die Stützvorrichtungen der Stützeinheit sind bevorzugt miteinander verbunden, vorzugsweise durch eine Bodentraverse. Die Stützeinheit ist in einem Vertikalschnitt vorzugsweise U-förmig. Die Stützeinheit kann zwei gegenüberliegende und als Seitenwände ausgebildete vertikal feststehende Führungswände mit innenliegenden Seitenflächen zur Anlage seitlicher Bereiche der beiden Trume aufweisen. Der Schwenkarm kann außerhalb der innen liegenden Seitenfläche der betreffenden Führungswand schwenkbar gelagert sein. Bevorzugt steht das Stützelement in der Stützposition gegenüber der Seitenfläche ins Innere der Stützeinheit vor. Bevorzugt steht das Stützelement in der Ausweichposition nicht wesentlich über die innere Seitenfläche der betreffenden Führungswand vor. Die Bodentraverse kann an ihrer Oberseite eine Ablagefläche für das Untertrum der Leitungsaufnahmeeinrichtung aufweisen.

Grundsätzlich ist denkbar, dass das System nur genau eine Stützeinheit umfasst. Bevorzugt sind mindestens zwei Stützeinheiten vorgesehen. Die Stützeinheiten sind bevorzugt in einer Längsrichtung des Systems voneinander beanstandet. Bevorzugt stimmt die Längsrichtung des Systems mit der Längsrichtung der Leitungsaufnahmeeinrichtung überein.

In der bevorzugten Ausführungsform umfasst das System, bevorzugt in dem Bereich, in dem das Untertrum der Leitungsaufnahmeeinrichtung ablegbar ist, zwei gegenüberliegende Führungsseitenteile, zwischen denen mindestens eines der Trume aufgenommen werden kann. Vorzugsweise erstrecken sich die zwei gegenüberliegenden Führungsseitenteile von einer Stützeinheit bis zu einer anderen Stützeinheit. Bevorzugt verbinden die zwei gegenüberliegenden Führungsseitenteile die mindestens zwei Stützeinheiten miteinander.

Das Führungsseitenteil umfasst bevorzugt jeweils L-förmig angeordnete Schenkel. Der eine Schenkel kann sich längs der Innenseite der Seitenwände und der andere Schenkel kann sich senkrecht zu den Seitenwänden ins Innere der Stützeinheit erstrecken und seitliche Führungen bzw. Ablageflächen für das Untertrum der Leitungsaufnahmeeinrichtung bilden.

Die zwei gegenüberliegenden Führungsseitenteile können zusammen auch als Führungsrinne bezeichnet werden. Es kann ein Bodenbereich vorgesehen sein, der die zwei gegenüberliegenden Führungsseitenteile miteinander verbindet, beispielsweise einstückig.

In der Ausführungsform, in der das System mindestens eine Sensorvorrichtung umfasst, ist diese vorzugsweise an mindestens einem Führungsseitenteil angeordnet. Hierdurch kann auf gesonderte Sensorpositionierungsmittel verzichtet werden und es kann auf besonders einfache Weise ein Abstand zwischen der Sensorvorrichtung und der zugehörigen Steuereinheit bzw. dem zugehörigen Stützelement realisierbar sein, um der Steuereinheit und dem Aktuator genug Zeit für das Bewegen des Stützelements zu verschaffen.

Die Längserstreckung der Führungsseitenteile verläuft bevorzugt in Längsrichtung des Systems.

Jede Stützeinheit umfasst bevorzugt zwei Aktuatoren, denen weiter bevorzugt jeweils genau eine Steuereinheit zugeordnet ist. Mit jeder dieser beiden Steuereinheiten einer Stützeinheit können jeweils genau zwei Sensorvorrichtungen wirkverbunden sein, wobei diese zwei Sensorvorrichtungen mit genau einer Steuereinheit wirkverbunden sein können oder mit jeder dieser beiden Steuereinheiten. Alternativ ist denkbar, dass mit jeder dieser beiden Steuereinheiten vier Sensorvorrichtungen wirkverbunden sind, von denen jeweils zwei einander gegenüberliegen können. Da die Signale von gegenüberliegenden Sensorvorrichtungen gleich sein sollten, können Sie von der Steuereinheit zur Plausibilitätskontrolle oder als Redundanz im Fehlerfalle eine Sensorvorrichtung herangezogen werden. Zudem ist denkbar, den zwei Aktuatoren einer Stützeinheit eine gemeinsame Steuereinheit zuzuordnen. Mit dieser gemeinsamen Steuereinheit können beispielsweise genau zwei oder genau vier Sensorvorrichtungen wirkverbunden sein.

Die Erfindung umfasst weiterhin eine Anordnung bestehend aus einem System zur Abstützung einer Leitungsaufnahmeeinrichtung mit den oben beschriebenen Merkmalen sowie einer Leitungsaufnahmeeinrichtung.

Die Leitungsaufnahmeeinrichtung der Anordnung umfasst bevorzugt eine Energieführungskette zur Führung von Leitungen, wie z.B. Kabeln oder Schläuchen. Die Energieführungskette weist vorzugsweise zwei parallele Laschenstränge auf, wobei bevorzugt jeder Laschenstrang Seitenlaschen umfasst, welche besonders bevorzugt mittels eines biegsamen Gelenkverbinders miteinander verbunden und gegeneinander abwinkelbar sind. Alternativ umfasst die Leitungsaufnahmeeinrichtung eine Bandkette, bei der Glieder oder Bereiche über ein biegsames Band miteinander verbunden sind.

Bevorzugt ist die Energieführungskette bzw. die Bandkette für Reinraumanwendungen zertifiziert, vorzugsweise nach DIN EN ISO 14644-1 ISO, bevorzugt in der zum Anmeldetag dieser Druckschrift gültigen Fassung und ganz besonders bevorzugt nach ISO Klasse 1 bis ISO Klasse 5. Bevorzugt ist der biegsame Gelenkverbinder in Abwinkelungsrichtung der Seitenlaschen elastisch deformierbar.

Die Anordnung eignet sich besonders für den Einsatz in sauberer Umgebung etwa in einem Reinraum. Die Anordnung eignet sich auch besonders für den Einsatz in einer besonders ruhebedürftigen Umgebung oder dann, wenn nur geringe mit dem Verfahren der Leitungsaufnahmeeinrichtung verbundene Reibungsverluste tolerierbar sind.

In der Ausführungsform, in der das Stützelement des Systems der Anordnung als Stützrolle ausgeführt ist, weist die Anordnung bevorzugt keine aufeinander abgleitenden Flächen auf.

Bevorzugt verfährt die Leitungsaufnahmeeinrichtung mit einer Geschwindigkeit von mehr als 5 m/s oder 10 m/s oder 15 m/s.

Die Erfindung umfasst auch eine Verwendung des vorbeschriebenen Systems oder der vorbeschriebenen Anordnung nach.

Bevorzugt ist bei dieser Verwendung eine Sensorvorrichtung auf der der ersten Anschlussstelle abgewandten Seite des Stützelements und eine andere Sensorvorrichtung auf der der ersten Anschlussstelle zugewandten Seite des Stützelements angeordnet.

Bevorzugt werden die Signale beider Sensorvorrichtungen, jeweils darauf ausgewertet werden, ob die zugehörige Sensorvorrichtung eine Anwesenheit oder Abwesenheit des Untertrums anzeigt.

Vorzugsweise wird das Stützelement von seiner Stützposition in seine Ausweichposition verlagert, wenn eine der beiden Sensorvorrichtungen die Anwesenheit des Untertrums anzeigt und die andere der beiden Sensorvorrichtungen die Abwesenheit des Untertrums anzeigt, die Signale beider Sensorvorrichtungen also nicht übereinstimmen.

Vorzugsweise wird das Stützelement von seiner Ausweichposition in seine Stützposition verlagert, wenn beide Sensorvorrichtungen die Anwesenheit oder die Abwesenheit des Untertrums anzeigen, die Signale beider Sensorvorrichtungen also übereinstimmen. Die Verwendung kann auf einem einzigen Signalvergleich beruhen und daher besonders einfach und zuverlässig durchführbar sein.

Die Bewegung des Stützelements von seiner Stützposition in seine Ausweichposition und/oder umgekehrt kann durch Ansteuern des zugehörigen Aktuators erfolgen. Die Bewegung des Stützelements von seiner Stützposition in seine Ausweichposition oder umgekehrt kann durch Federkraft bewirkt werden.

Zur Bewegung des Stützelements von seiner Stützposition in seine Ausweichposition kann der zugehörige Aktuator von der Steuereinheit angesteuert werden, indem er mit - bevorzugt elektrischer - Energie versorgt wird. Alternativ ist denkbar, dass zu diesem Zweck der zugehörige Aktuator von der Steuereinheit angesteuert wird, indem eine Versorgung des zugehörigen Aktuators mit - bevorzugt elektrischer - Energie unterbrochen wird, sodass der Aktuator es zulässt, dass das Stützelement von seiner Stützposition in seine Ausweichposition mittels Gewichtskraft und/oder Federkraft verlagert wird.

Zur Bewegung des Stützelements von seiner Ausweichposition in seine Stützposition kann der zugehörige Aktuator von der Steuereinheit angesteuert werden, indem eine Versorgung des zugehörigen Aktuators mit elektrischer Energie unterbrochen wird, sodass der Aktuator es zulässt, dass das Stützelement von seiner Ausweichposition in seine Stützposition mittels Gewichtskraft und/oder Federkraft verlagert wird. Alternativ ist denkbar, dass zu diesem Zweck der zugehörige Aktuator von der Steuereinheit angesteuert werden, indem er mit - bevorzugt elektrischer - Energie versorgt wird.

Wenn die Leitungsaufnahmeeinrichtung Reinraum zertifiziert ist oder mit einer Geschwindigkeit von mehr als 5 m/s oder 10 m/s oder 15 m/s verfahren wird, dann kommen die Vorteile der Erfindung besonders zur Geltung.

Bevorzugt wird die Anordnung eigenständig betrieben, also unabhängig von Sensor- und/oder Steuersignalen einer übergeordneten Maschinensteuerung.

Der vorliegenden Erfindung liegt als eine zweite Aufgabe das Ziel zugrunde, eine Lösung für eine Feder-Stützvorrichtung vorzuschlagen, welche hinsichtlich zumindest eines der genannten Nachteile verbessert ist oder erweiterte Einsatzmöglichkeiten aufweist.

Die erfindungsgemäße Feder-Stützvorrichtung dient der Abstützung eines Obertrums einer Leitungsaufnahmeeinrichtung, insbesondere einer Energieführungskette. Die Feder-Stützvorrichtung umfasst ein Stützelement zur Abstützung des Obertrums von unten und mindestens einen Schwenkarm, an dem das Stützelement mittelbar oder unmittelbar angeordnet ist, wobei das Stützelement zwischen einer Stützposition, in der das Stützelement als Abstützung des Obertrums von unten wirken kann, und einer Ausweichposition, in der das Stützelement nicht als Abstützung des Obertrums von unten wirken kann, verlagerbar ist. Die Feder-Stützvorrichtung weist eine passive Verlagerungsvorrichtung auf, die eine mittels Federkraft in den Verfahrweg der Leitungsaufnahmeeinrichtung hinein bewegbare Schaltvorrichtung in Form eines Schaltkörpers umfasst. Die Federkraft wird durch ein als Schraubenfeder ausgebildetes Federelement bewirkt, das zwischen einem Federlager der Feder-Stützvorrichtung und dem Schwenkarm oder einem mit dem Schwenkarm fest verbundenem weiteren Schwenkarm wirkt. Der weitere Schwenkarm stellt bevorzugt einen Hebelvorsprung zur Bewirkung einer Hebelwirkung für das Federelement bereit. Das Federlager kann an der Stützwand oder der Führungswand oder dem Boden der Feder-Stützvorrichtung angeordnet sein. Das Federlager kann einen Vorsprung umfassen oder hierdurch gebildet sein. Das Federlager kann eine Bohrung, etwa in der Tragstruktur, umfassen oder hierdurch gebildet sein. Das Federelement kann in das Federlager eingehakt sein. Bevorzugt sind Federkontaktflächen an dem Federlager und an dem Schwenkarm oder dem weiteren Schwenkarm vorgesehen, zur Übertragung der Federkraft. Die Federkontaktflächen sind bevorzugt als Haftreibungsflächen und/oder als Rollreibungsflächen ausgebildet. Indem an den Federkontaktflächen bevorzugt Haftreibung und/oder Rollreibung, aber keine Gleitreibung auftritt, kann Abrieb reduziert sein.

Die Feder-Stützvorrichtung kann wie die oben beschriebene Stützvorrichtung ausgestaltet sein. Die Feder-Stützvorrichtung kann mit oder ohne aktive Verlagerungsvorrichtung vorgesehen sein.

Der Schwenkarm und der weitere Schwenkarm können zusammen einen Winkelhebel bilden.

Die Ausbildung des Federelements der Feder-Stützvorrichtung als Schraubenfeder und nicht etwa als sich an einer Wand gleitend abstützende Stab-Biegefeder wie bei der EP 2 419 981 B1, hat insbesondere den Vorteil, dass sie Abrieb vermeidet oder verhindert.

Die Feder-Stützvorrichtung dient der - bevorzugt zeitweisen - Abstützung eines Obertrums einer Leitungsaufnahmeeinrichtung.

Bevorzugt ist die Leitungsaufnahmeeinrichtung, die das Obertrum aufweist zu deren Abstützung die Feder-Stützvorrichtung dient, zum Führen mindestens einer Leitung geeignet, wie z.B. eines Kabels, Schlauchs oder dergleichen, bevorzugt zwischen einer ersten Anschlussstelle an einem Festpunkt und einer dazu relativbeweglichen zweiten Anschlussstelle an einem Mitnehmer. Die Leitungsaufnahmeeinrichtung kann ein mit der ersten Anschlussstelle verbindbares Untertrum und das Obertrum aufweisen. Das Obertrum kann mit der zweiten Anschlussstelle verbindbar sein. Das Obertrum und das Untertrum können über einen verfahrbaren Umlenkbogen miteinander verbunden sein. Die Leitungsaufnahmeeinrichtung ist entlang eines Verfahrwegs verfahrbar. Beim Verfahren kann das Obertrum oberhalb des Untertrums verlaufen. Das Stützelement weist einen Stützkörper mit einer Gleitfläche und/oder eine Stützrolle mit einer Lauffläche auf.

Die Feder-Stützvorrichtung kann eine Tragstruktur zur Aufnahme von auf die Gleitfläche und/oder die Lauffläche insbesondere durch das Obertrum vertikal von oben nach unten aufgebrachte Kräfte aufweisen.

Das Federelement kann in einer von seitlich außen zugänglichen Öffnung der Feder-Stützvorrichtung bzw. der Tragstruktur angeordnet sein, zwecks einfacher Austauschbarkeit bei Defekt.

Die Tragstruktur der Feder-Stützvorrichtung kann eine Führungswand umfassen und im horizontalen Querschnitt mit dieser Führungswand eine U-Form bildende Stützwände. Das Federelement kann innerhalb dieses U-förmigen Querschnitts angeordnet sein.

Die Feder-Stützvorrichtung weist bevorzugt zwei Schwenkarme auf. In der Ausführungsform, in der die Feder-Stützvorrichtung zwei Schwenkarme umfasst, kann sie zwei Federelemente aufweisen oder nur genau ein Federelement.

Der Schaltkörper der Schaltvorrichtung kann jeweils zwei entgegengesetzte Anlaufflächen, insbesondere Anlaufschrägen aufweisen, die mit dem Umlenkbogen zusammenwirken können, um den Schaltkörper aus dem Verfahrweg der Leitungsaufnahmeeinrichtung heraus zu bewegen. Der Schaltkörper der Schaltvorrichtung kann mit dem Stützelement der Feder-Stützvorrichtung so gekoppelt sein, dass dieses von seiner Stützposition in die Ausweichposition bewegbar ist.

Bevorzugt weist der Schaltkörper eine Vertikalgleitfläche zur Anlage seitlicher Bereiche des Obertrums in aus dem Verfahrweg der Leitungsaufnahmeeinrichtung heraus bewegten Zustand des Schaltkörpers auf. Bevorzugt ist die Vertikalgleitfläche in aus dem Verfahrweg der Leitungsaufnahmeeinrichtung heraus bewegten Zustand des Schaltkörpers zumindest in etwa vertikal angeordnet. Bevorzugt weist der Schaltkörper einen Gleitbügel auf, an dem die Vertikalgleitfläche angeordnet ist. Der Gleitbügel kann von einer Anlaufschräge zu der entgegengesetzten Anlaufschräge reichen. Er kann um den unteren Umfang der Stützrolle verlaufen.

Bevorzugt ist bei der Feder-Stützvorrichtung das Stützelement an der Schaltvorrichtung, die ein Verschwenken des Stützelements aus der Ausweichposition in die Stützposition bewirkt, ausgebildet. Hierdurch wird eine einfache, die Koppelung zwischen Schaltungs- und Stützelement bewirkende Konstruktion erzielt.

Zwei gegenüberliegende Feder-Stützvorrichtungen können zu einer Feder-Stützeinheit verbunden sein, etwa mittels einer Bodentraverse.

Die Merkmale aller Aspekte, d. h. insbesondere Merkmale des Systems, der Anordnung, der Verwendung und der Feder-Stützvorrichtung sind im Rahmen der Erfindung zunächst unabhängig offenbart und beansprucht, jedoch erkennbar auch miteinander kombinierbar. So können zum Beispiel die Merkmale des Systems, soweit kompatibel, für die Feder-Stützvorrichtung vorteilhaft sein und umgekehrt. Sämtliche Merkmale des jeweiligen Ausführungsbeispiels bzw. der jeweiligen weiter oben dargestellten Aspekte und Ausführungsformen sind unabhängig voneinander jeweils für sich genommen oder in Kombination miteinander, auch in Kombination mit Merkmalen anderer Aspekte, Ausführungsbeispiele bzw. Ausführungsformen, allgemein als Merkmale der Erfindung offenbart.

Weitere Einzelheiten, Vorteile und Merkmale der Erfindung lassen sich, ohne Beschränkung der Allgemeinheit der vorstehenden Beschreibung, dem nachfolgenden Teil der Beschreibung entnehmen, in welchem mindestens ein Ausführungsbeispiel anhand der beigefügten Zeichnungen näher erläutert wird.

Es zeigen:
- FIG. 1: eine Seitendarstellung eines Systems 100 und einer Anordnung 200 mit einer als Energieführungskette ausgebildeten Leitungsaufnahmeeinrichtung in drei möglichen Verfahrpositionen,
- FIG. 2: eine Ansicht in Längsrichtung auf die in Figur 1 als zweite von rechts dargestellte Stützeinheit, bei der die Stützelemente in Stützposition sind, passend zu der in Fig. 1 links und rechts dargestellten Verfahrposition der Leitungsaufnahmeeinrichtung,
- FIG. 3: Schnittdarstellung entlang der Schnittlinie D-D in Fig. 1, passend zu der in Fig. 1 mittig dargestellten Verfahrposition der Leitungsaufnahmeeinrichtung,
- FIG. 4: eine Ansicht wie in Fig. 1, mit in Fig. 1 links dargestellter Verfahrposition der Leitungsaufnahmeeinrichtung,
- FIG. 5: eine Ansicht wie in Fig. 1, mit in Fig. 1 mittig dargestellter Verfahrposition der Leitungsaufnahmeeinrichtung,
- FIG. 6: eine Ansicht wie in Fig. 1, mit in Fig. 1 rechts dargestellter Verfahrposition der Leitungsaufnahmeeinrichtung,
- FIG. 7: Schnittdarstellung entlang der Schnittlinie A-A in Fig. 4,
- FIG. 8: Schnittdarstellung entlang der Schnittlinie B-B in Fig. 5,
- FIG. 9: Schnittdarstellung entlang der Schnittlinie C-C in Fig. 6,
- FIG. 10: das Detail E aus Fig. 4 in größerem Maßstab,
- FIG. 11: in Längsrichtung die Stützeinheit aus Fig. 10,
- FIG. 12: in perspektivische Darstellung die Stützeinheit aus Fig. 10,
- FIG. 13: ein Teil von Fig. 5 in Prinzipdarstellung von oben,
- FIG. 14: eine genauere Darstellung des Details F aus Fig. 13,
- FIG. 15: ein Ablaufplan der Verwendung des Systems 100 und der Anordnung 200,
- FIG. 16: die in dem Detail F in Fig. 4 gezeigte Feder-Stützvorrichtung in größerer Darstellung, als Ausführungsbeispiel eines eigenständig beanspruchten weiteren Aspekts,
- FIG. 17: die Feder-Stützvorrichtung aus Fig. 16 in anderer Ansicht, und
- FIG. 18: eine perspektivische Darstellung der Feder-Stützvorrichtung aus Fig. 16.

Das in den Figuren gezeigte Ausführungsbeispiel des erfindungsgemäßen Systems ist als Ganzes mit 100 bezeichnet.

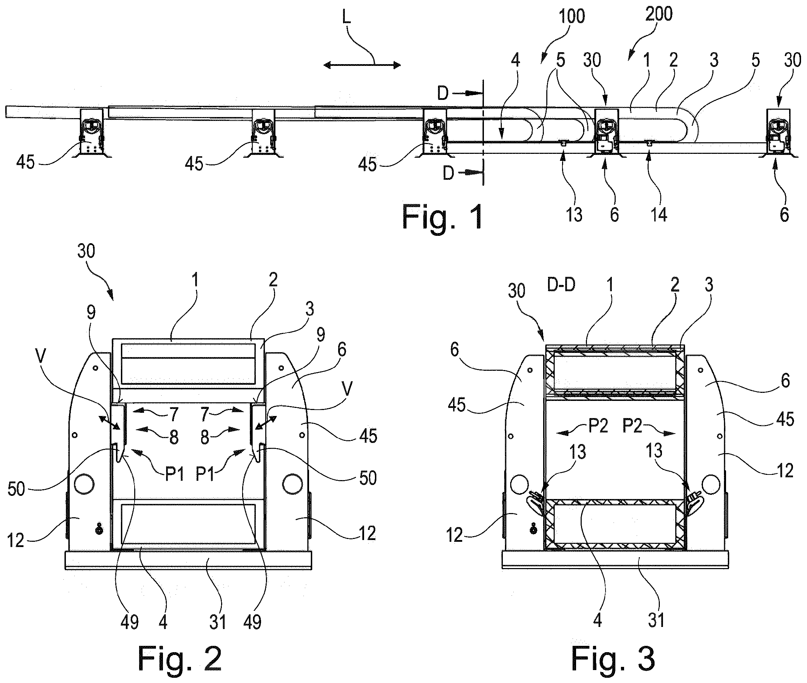

Das System 100 dient zur Abstützung eines Obertrums 1 einer Leitungsaufnahmeeinrichtung 2 zum Führen mindestens einer Leitung, wie z.B. eines Kabels, Schlauchs oder dergleichen, zwischen einer ersten Anschlussstelle an einem Festpunkt und einer dazu relativbeweglichen zweiten Anschlussstelle an einem Mitnehmer, wobei die Leitungsaufnahmeeinrichtung 2 ein mit der ersten Anschlussstelle verbindbares Untertrum 4 und das Obertrum 1 aufweist, und das Obertrum 1 mit der zweiten Anschlussstelle verbindbar ist. Das Obertrum 1 und das Untertrum 4 sind, wie etwa in Fig. 1 erkennbar, über einen verfahrbaren Umlenkbogen 5 miteinander verbunden. Diese Figur zeigt auch, dass die Leitungsaufnahmeeinrichtung 2 entlang eines Verfahrwegs verfahrbar ist und beim Verfahren das Obertrum 1 oberhalb des Untertrums 4 verläuft. Obertrum 1 und Untertrum 4 verlaufen dabei im Wesentlichen horizontal.

Im gezeigten Ausführungsbeispiel weist das System 100 mehrere, z.B. vier Stützvorrichtungen 6 auf. Jede Stützvorrichtung 6 umfasst ein Stützelement 7 zur zeitweisen Abstützung des Obertrums 1 von unten, das zwischen einer Stützposition P1, in der es als Abstützung des Obertrums 1 von unten wirken kann, und einer Ausweichposition P2, in der es nicht als Abstützung des Obertrums 1 von unten wirken kann, verlagerbar ist.

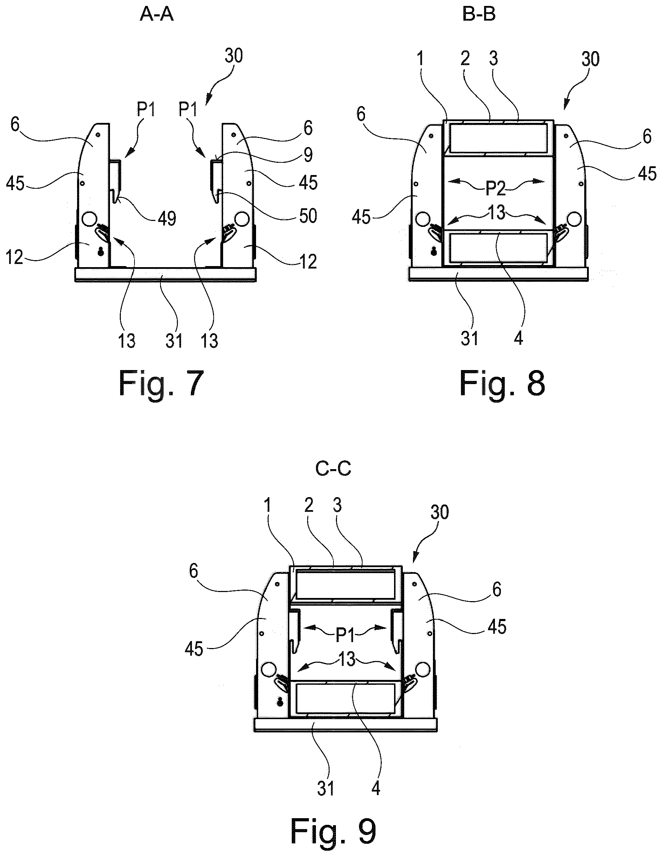

Wie beispielsweise ein Vergleich der Fig. 7 und 8 zeigt, ragt das Stützelement 7 in der Ausweichposition P2, nicht in den Verfahrweg der Leitungsaufnahmeeinrichtung 2 und ihres Umlenkbogens hinein. Der Umlenkbogen 5 kann an dem Stützelement 7 vorbeifahren ohne dieses zu berühren, wenn sich das Stützelement 7 in der Ausweichposition P2 befindet.

Jeweils zwei Stützvorrichtungen 6 sind gepaart und gegenüberliegend angeordnet und zwar derart, dass sich ihre Stützelemente 7 bei Verlagerung von der Ausweichposition P2 in die Stützposition P1 aufeinander zu bewegen (vgl. Fig. 3 und Fig. 2). Die zwei Stützvorrichtungen 6 eines Paars sind jeweils zu einer Stützeinheit 30 durch eine Bodentraverse 31 miteinander verbunden. Zwei entsprechende Stützeinheiten 30, die Längsrichtung L des Systems 100 voneinander beabstandet sind, sind in Fig. 1 rechts gezeigt.

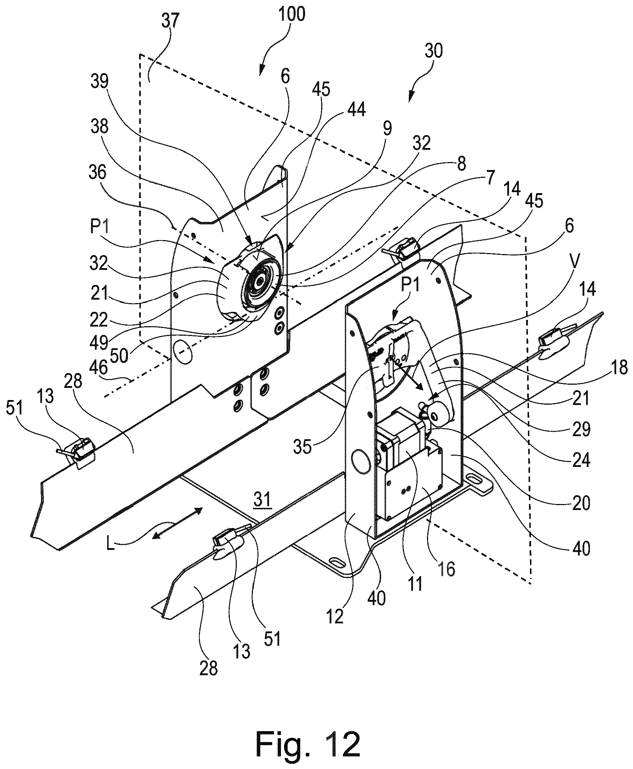

Wie am einfachsten in Fig. 12 erkennbar, weist das Stützelement 7 im gezeigten Ausführungsbeispiel eine um eine Drehachse 36 drehbare Stützrolle 8 mit einer Lauffläche 9 auf. Die Lauffläche 9 weist nach oben und ist von oben frei zugänglich.

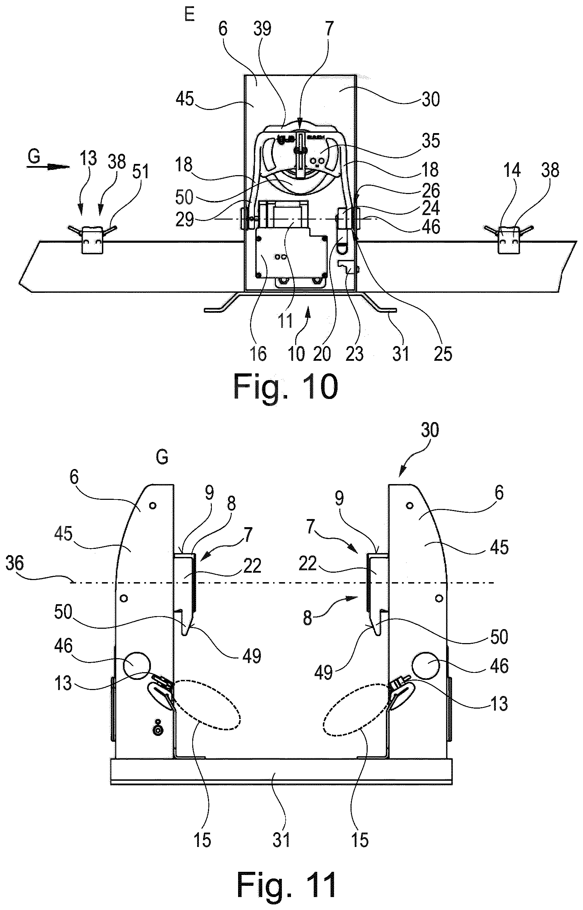

Beispielsweise die Fig. 10 und 12 zeigen, dass die Stützvorrichtung 6 eine aktive Verlagerungsvorrichtung 10 aufweist, die hier jeweils genau einen steuerbaren Aktuator 11 umfasst, zur Verlagerung des Stützelements 7 von der Stützposition P1 in die Ausweichposition P2. Auch die Kopplungseinrichtung 29, die den Aktuator 11 mit dem Stützelement 7 koppelt, ist, etwa in Fig. 10, gezeigt. Der Aktuator 11 ist im gezeigten Ausführungsbeispiel als elektrischer Rotationsmotor 33 und zwar als Schrittmotor ausgebildet.

Bei der Leitungsaufnahmeeinrichtung 2 handelt es sich im gezeigten Ausführungsbeispiel um eine Energieführungskette 3 zur Aufnahme von Leitungen, Schläuchen oder dgl.. Benachbarte Glieder der Energieführungskette sind, wie in den Fig. nicht gezeigt, gelenkig miteinander verbunden und bilden somit eine bewegliche Leitungsaufnahmeeinrichtung 2 bzw. dynamische Leitungsführung. Die Längsrichtung L des Systems 100 stimmt mit der Längsrichtung der Leitungsaufnahmeeinrichtung 2 überein.

Das System 100 weist eine Steuereinheit 16 zur Steuerung des Aktuators 11 auf. Im gezeigten Beispiel ist jedem Aktuator 11 eine eigene Steuereinheit 16 zugeordnet. Zudem weist das System 100 mindestens eine Sensorvorrichtung 13, 14 zur Ermittlung der Position des Umlenkbogens 5 auf, wobei mit jeder Steuereinheit 16 im gezeigten Beispiel genau zwei Sensorvorrichtungen 13,14 wirkverbunden sind. Die mit der Steuereinheit 16 der in Fig. 1 rechts dargestellten Stützvorrichtung 6 wirkverbundenen Sensorvorrichtungen sind der einfacheren Darstellbarkeit halber nicht gezeigt.

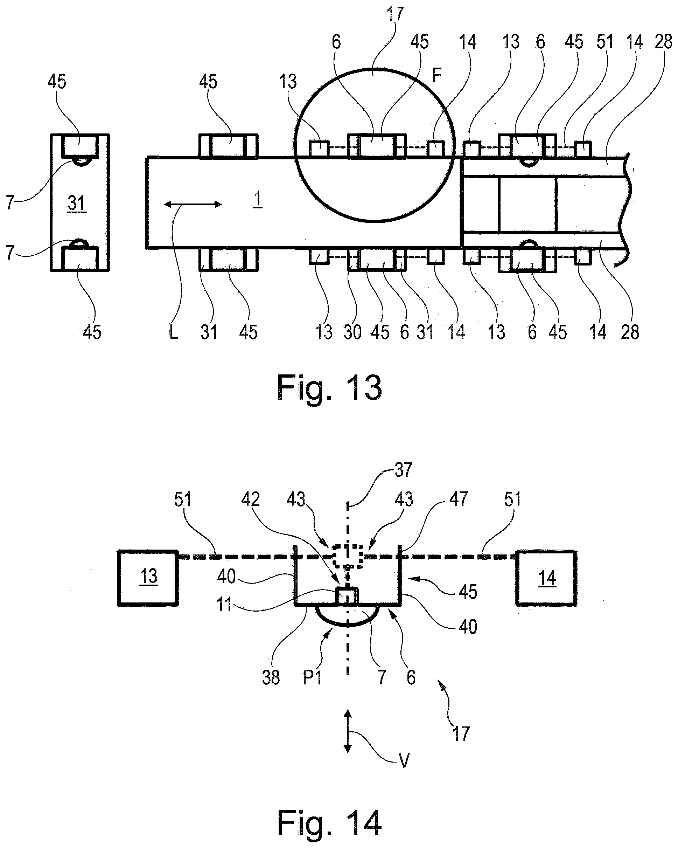

Die Steuereinheit 16m umfasst jeweils eine Auswerteeinheit und deren Eingang ist mit genau zwei Sensorvorrichtung 13, 14 wirkverbunden, im gezeigten Ausführungsbeispiel mit einer Signalleitung 51. Die Signalleitung 51 sind in den Fig. 1, 3 bis 12 der besseren Darstellbarkeit halber nur angedeutet. In den Fig. 13 und 14 sind Signalleitungen 51 gestrichelt dargestellt. Der Ausgang jeder Steuereinheit 16 ist mit jeweils genau einem Aktuator 11 wirkverbunden.

Wie am besten Fig. 12 und Fig. 14 zeigen, wirkt die Steuereinheit 16 jeweils mit genau zwei Sensorvorrichtungen 13, 14 zusammen, die bezogen auf eine die Drehachse 36 der Stützrolle 8 enthaltende vertikale Ebene 37 einander gegenüber liegen.

Jede Sensorvorrichtung 13, 14 umfasst einen Sensor 38 mit einem Detektionsbereich 15 (Fig. 10, 11). Der Sensor 38 erfasst die Anwesenheit oder Abwesenheit des Untertrums 4 in seinem Detektionsbereich 15.

Die Sensorvorrichtung 13, 14, insbesondere der Sensor 38 wirkt berührungslos, und umfasst im gezeigten Ausführungsbeispiel einen Lichttaster.

Die Fig. 13 und 14 zeigen, dass eine Baugruppe 17 vorgesehen ist, die genau eine Steuereinheit 16 und genau zwei Sensorvorrichtungen 13, 14 umfasst und genau eine Stützvorrichtung 6 mit genau einem Stützelement 7 und genau einem Aktuator 11. Wie aus Fig. 14 hervorgeht, ist die Steuereinheit 16 so eingerichtet, dass sie den Aktuator 11 ausschließlich in Abhängigkeit der Signale der beiden Sensorvorrichtungen 13, 14 steuern kann. Die Baugruppe 17 kann somit im Fehlerfall leicht ausgetauscht oder auch leicht nachgerüstet werden.

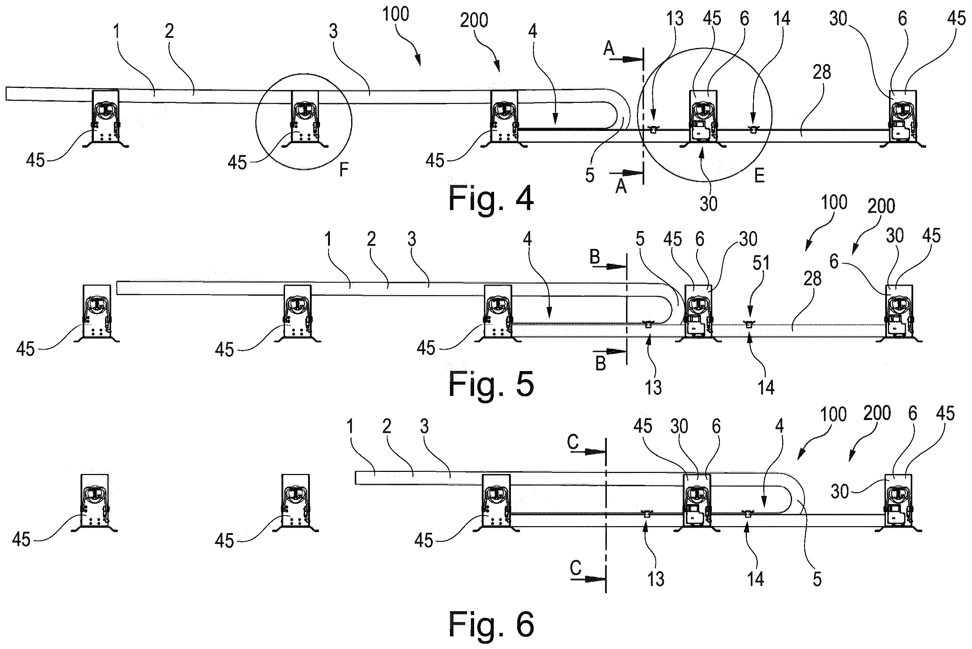

Beispielsweise die Fig. 6 und 12 lassen erkennen, dass die Stützvorrichtung 6 eine Tragstruktur 12 zur Aufnahme von auf die Lauffläche 9 durch das Obertrum 1 vertikal von oben nach unten aufgebrachte Kräfte aufweist.

Das Stützelement 7 ist mittels einer plattenförmigen Halterung 35 an zwei Schwenkarmen 18 angeordnet (Fig. 12). Die Stützvorrichtung 6 weist eine vertikal feststehende Führungswand 38 mit einer Öffnung 39 auf. Die Stützrolle 8 erstreckt sich in der Stützposition P1 durch die Öffnung 39. Die Leibung der Öffnung 39 stellt einen Anschlag für die Halterung 35 und/oder den mindestens einen Schwenkarm 18 bereit, der die Stützposition P1 der Stützrolle 8 definiert, indem er eine Begrenzung des Verschwenkwinkels der beiden Schwenkarme 18 bewirkt.

An der Führungswand 38 sind zwei plattenförmige Stützwände 40 abgewinkelt zur Führungswand 38 angeordnet und z.B. einteilig als umgeformtes Blechteil mit der Führungswand 38 hergestellt.

Fig. 12 und 14 zeigen auch, dass die Führungswand 38 mit den Stützwänden 40 einen etwa U-förmigen horizontalen Querschnitt ausbildet und die Steuereinheit 16 und der Aktuator 11 innerhalb dieses U-förmigen Querschnitts angeordnet sind.

Die Schwenkarme 18 sind Teil der Tragstruktur 12, dienen also zur Aufnahme von auf die Lauffläche 9 durch das Obertrum 1 vertikal von oben nach unten aufgebrachter Kräfte. Die Schwenkarme 18 sind jeweils mittels eines die Schwenkachse 46 der Schwenkarme definierenden Drehlagers 25 gelagert, das als Kugellager 26 ausgeführt ist.

Das System 100 vermeidet dank der Stützrollen 8 und der Drehlager 25 möglichst weitgehend aufeinander gleitende Flächen.

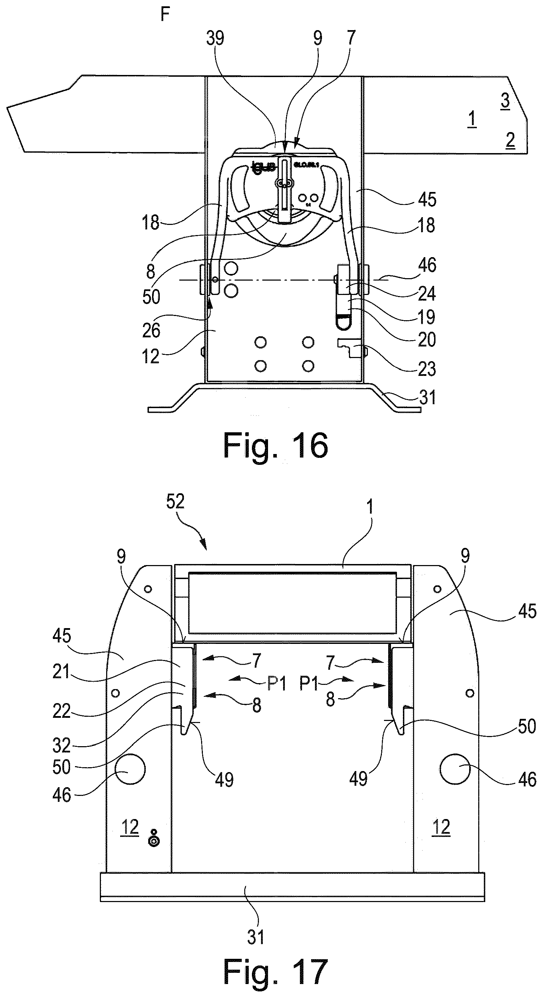

Wie erneut die Fig. 10 und 12 zeigen, umfasst die aktive Verlagerungsvorrichtung 10 ferner ein Federelement 19 in Form einer Schrauben-Zugfeder, das entgegen der Richtung einer durch den Aktuator 11 erzeugten Rotationsbewegung wirkt. Hierzu wirkt das Federelement 19 zwischen einem Federlager 23 (Fig. 10) und einem mit dem Schwenkarm 18 fest verbundenen und einen Winkelhebel bildenden weiteren Schwenkarm 24. Das Federlager kann, wie zum Beispiel in Fig. 10 und 16 erkennbar, an einer Stützwand 40 der Stützvorrichtung 6 angeordnet sein. Es kann auch an der Führungswand 38 der Stützvorrichtung 6 oder dem Boden 48 der Stützvorrichtung angeordnet sein. Der einfacheren zeichnerischen Darstellbarkeit halber ist das Federelement in den Fig. im nicht in das Federlager eingehakten Zustand gezeigt.

Zusätzlich zu der oben beschriebenen aktiven Verlagerungsvorrichtung 10 weist das System 100 somit eine passive Verlagerungsvorrichtung 21 auf. Diese nutzt Komponenten der aktiven Verlagerungsvorrichtung. Durch die passive Verlagerungsvorrichtung 21 ist die Bewegung des Stützelements 7 zwischen der Stützposition P1 und der Ausweichposition P2 auch dann gewährleistet, wenn die aktive Verlagerungsvorrichtung 10, etwa aufgrund eines Sensorfehlers oder Stromausfalls, ausfällt.

Die passive Verlagerungsvorrichtung umfasst eine in den Verfahrweg der Leitungsaufnahmeeinrichtung 2 hinein bewegbare Schaltvorrichtung in Form eines Schaltkörpers 22. Der Schaltkörper 22 weist zwei einander entgegengesetzte Anlaufschrägen 32 auf, die mit dem Umlenkbogen 5 im Falle eines Versagens der aktiven Verlagerungsvorrichtung 10 durch Kontakt mit innen und außenliegenden Bereichen des Umlenkbogen zusammenwirken können, um den Schaltkörper 22 aus dem Verfahrweg der Leitungsaufnahmeeinrichtung 2 heraus zu bewegen. Der Schaltkörper 22 ist mit dem Stützelement 7 so gekoppelt, dass dieses von seiner Stützposition P1 in die Ausweichposition P2 verlagert wird, wenn der Schaltkörper aus dem Verfahrweg der Leitungsaufnahmeeinrichtung heraus bewegt wird. Der Schaltkörper 22 ist durch seine Schwerkraft und durch Federkraft in den Verfahrweg der Leitungsaufnahmeeinrichtung 2 hinein bewegbar und so mit dem Stützelement 7 gekoppelt, dass dieses hierbei von seiner Ausweichposition P2 in die Stützposition P1 verlagert wird.

Der Schaltkörper 22 weist eine Vertikalgleitfläche 49 zur Anlage seitlicher Bereiche des Obertrums 1 in aus dem Verfahrweg der Leitungsaufnahmeeinrichtung 2 heraus bewegten Zustand des Schaltkörpers 22 auf. Die Vertikalgleitfläche 49 ist in aus dem Verfahrweg der Leitungsaufnahmeeinrichtung heraus bewegten Zustand des Schaltkörpers 22 vertikal angeordnet und an einem von einer Anlaufschräge 32 zu der entgegengesetzten Anlaufschräge 32 reichenden Gleitbügel 50 angeordnet. Der Gleitbügel 50 verläuft um den unteren Umfang der Stützrolle 8 (Fig. 2, 12, 16).

Der Schaltkörper ist als ein mit Ausnahme der Lauffläche 9 um den Umfang der Stützrolle 8 angeordnetes Gehäuse ausgebildet. Das Gehäuse ist im Bereich einer Stirnseite der Stützrolle 8 offen.

Die Federkraft zum passiven zurückstellen bzw. verlagern von der Ausweichposition P2 in die Stützposition P1 wird durch dasselbe Federelement 19 bewirkt, das entgegen der Richtung einer durch den Aktuator 11 bewirkten Bewegung wirkt.

Wie etwa die Fig. 1 und 12 zeigen, erstrecken sich die Führungsseitenteile 28 in Längsrichtung L, die im montierten betriebsbereiten Zustand mit der Längsrichtung der Leitungaufnahmeeinrichtung 2 übereinstimmt.

Ein Ausführungsbeispiel der als Ganzes mit 200 bezeichneten Anordnung zeigt ebenfalls beispielsweise Fig. 1. Die Leitungsaufnahmeeinrichtung 2 der Anordnung 200 umfasst eine Energieführungskette 3 zur Führung von Leitungen, wie z.B. Kabeln oder Schläuchen. Die in den Figuren im Einzelnen nicht dargestellte Energieführungskette 3 weist zwei parallele Laschenstränge auf, wobei jeder Laschenstrang Seitenlaschen umfasst, welche besonders bevorzugt mittels eines biegsamen Gelenkverbinders miteinander verbunden und gegeneinander abwinkelbar sind. Der biegsame Gelenkverbinder ist in Abwinkelungsrichtung der Seitenlaschen elastisch deformierbar.

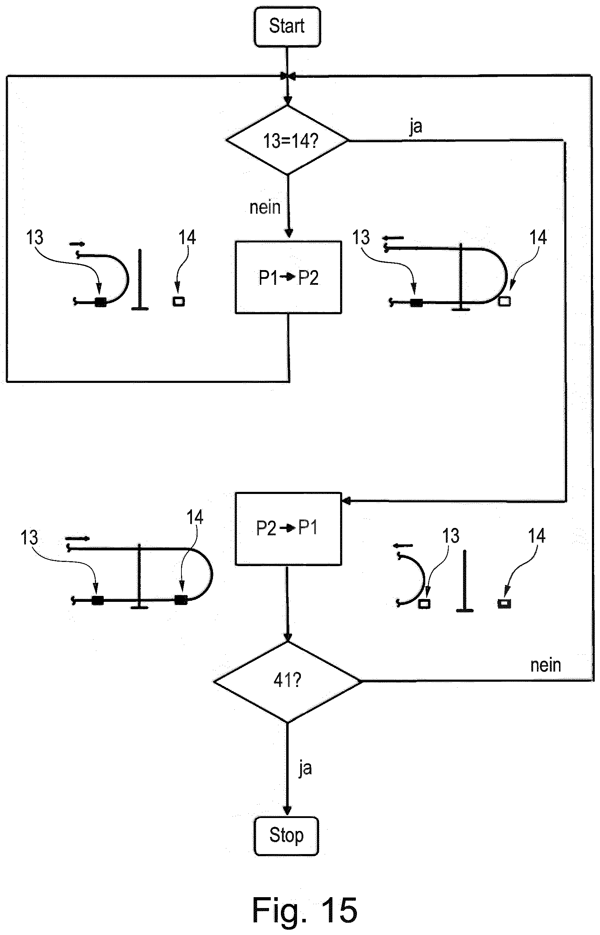

Einen Ablaufplan der Verwendung bzw. Wirkweise des Systems 100 und der Anordnung 200 zeigt Fig. 15. Bei dieser Verwendung bzw. bevorzugten Wirkweise ist eine Sensorvorrichtung 14 auf der der ersten Anschlussstelle abgewandten Seite des Stützelements 7 und eine andere Sensorvorrichtung 13 auf der der ersten Anschlussstelle zugewandten Seite des Stützelements 7 angeordnet.

Die Signale beider Sensorvorrichtungen 13, 14 werden jeweils darauf ausgewertet, ob die zugehörige Sensorvorrichtung 13, 14 eine Anwesenheit oder Abwesenheit des Untertrums 4 anzeigt. Das Stützelement 7 wird von seiner Stützposition P1 in seine Ausweichposition P2 bewegt, wenn eine der beiden Sensorvorrichtungen 13, 14 die Anwesenheit des Untertrums 4 anzeigt und die andere der beiden Sensorvorrichtungen 13, 14 die Abwesenheit des Untertrums 4 anzeigt, die Signale beider Sensorvorrichtungen 13, 14 also nicht übereinstimmen. Dies ist in der oberen Hälfte des Ablaufplans der Fig. 15 dargestellt. Das in der oberen Hälfte der Fig. 15 links dargestellte Piktogramm zeigt die in Fig. 5 gezeigten Position des Umlenkbogens 5 relativ zu der in Fig. 5 als zweite von rechts dargestellten Stützeinheit 30. Wie die zugehörige Fig. 8 zeigt, wurden beide Stützelemente 7 von ihrer Stützposition P1 in ihre Ausweichposition P2 verlagert. Das in der oberen Hälfte der Fig. 15 rechts dargestellte Piktogramm zeigt die Position des Umlenkbogens 5 relativ zu der in Fig. 5 und 6 als zweite von rechts dargestellten Stützeinheit 30 in einer zwischen den in den Fig. 5 und 6 gezeigten Positionen liegenden Position.

Das Stützelement 7 wird von seiner Ausweichposition P2 in seine Stützposition P1 bewegt, zumindest wenn beide Sensorvorrichtungen 13, 14 die Anwesenheit des Untertrums 4 anzeigen, oder optional auch wenn beide Sensorvorrichtungen 13, 14 die Abwesenheit des Untertrums 4 anzeigen, die Signale beider Sensorvorrichtungen 13, 14 also übereinstimmen. Dies ist in der unteren Hälfte des Ablaufplans der Fig. 15 dargestellt. Das in der unteren Hälfte der Fig. 15 links dargestellte Piktogramm zeigt die in Fig. 6 gezeigten Position des Umlenkbogens 5 relativ zu der in Fig. 6 als zweite von rechts dargestellten Stützeinheit 30. Wie die zugehörige Fig. 9 zeigt, wurden beide Stützelemente 7 von ihrer Ausweichposition P2 in ihre Stützposition P1 verlagert, in der das Stützelement 7 als Abstützung des Obertrums 1 von unten wirken kann. Der in Fig. 9 gezeichnete Abstand zwischen Obertrum 1 und Lauffläche 9 liegt an der Vorspannung bzw. Eigenspannung der Energieführungskette 3, die dazu führt, dass sich das Obertrum 1 erst bei zunehmendem Abstand des Umlenkbogens 5 von der Stützeinheit 30 auf die Stützelemente 7 dieser Stützeinheit 30 ablegt.

Das in der unteren Hälfte der Fig. 15 rechts dargestellte Piktogramm zeigt die in Fig. 4 gezeigten Position des Umlenkbogens 5 relativ zu der in Fig. 4 als zweite von rechts dargestellten Stützeinheit 30. Wie die zugehörige Fig. 7 zeigt, wurden beide Stützelemente 7 von ihrer Ausweichposition P2 in ihre Stützposition P1 verlagert, in der das Stützelement 7 als Abstützung des Obertrums 1 von unten wirken kann, wenn ein Obertrum 1 anwesend ist, bzw. wäre.

Diese Verwendung bzw. Wirkweise des Systems 100 ist besonders einfach und zuverlässig durchführbar. Sie ist durch einen Abschaltvorgang 41 beendbar.

Zur Bewegung des Stützelements von seiner Stützposition in seine Ausweichposition wird der zugehörige Aktuator 11 von der Steuereinheit 16 angesteuert, indem der Aktuator 11 mit elektrischer Energie versorgt wird.

Zur Bewegung des Stützelements von seiner Ausweichposition P2 in seine Stützposition P1 wird der zugehörige Aktuator 11 von der Steuereinheit 16 angesteuert, indem eine Versorgung des zugehörigen Aktuators 11 mit elektrischer Energie unterbrochen wird, sodass der Aktuator 11 es zulässt, dass das Stützelement 7 von seiner Ausweichposition P2 in seine Stützposition P1, vorzugsweise selbsttägig mittels Gewichtskraft und/oder Federkraft, verlagert wird.

Die Leitungsaufnahmeeinrichtung 2 kann für Reinraumanwendungen zertifiziert sein und/oder wird mit einer Geschwindigkeit von mehr als 5 m/s oder 10 m/s oder 15 m/s verfahren.

Ein Ausführungsbeispiel der eigenständig beanspruchten Feder-Stützvorrichtung 45 zeigen insbesondere die Fig. 16 bis Fig. 18.

Die Feder-Stützvorrichtung 45 ist weitgehend wie die oben beschriebene Stützvorrichtung 6 ausgebildet, allerdings hier ohne Aktuator und ohne mit einer Sensorvorrichtung oder einer Steuereinheit zusammenzuwirken. Zwei gegenüberliegende Feder-Stützvorrichtungen 45 sind mittels einer Bodentraverse 31 zu einer Feder-Stützeinheit 52 verbunden. Die Feder-Stützvorrichtung 45 dient der zeitweisen Abstützung eines Obertrums 1 einer Leitungsaufnahmeeinrichtung 2, beispielsweise einer Energieführungskette 3, von unten. Die Feder-Stützvorrichtung 45 umfasst ein Stützelement 7 und zwei Schwenkarme 18, an denen das Stützelement 7 angeordnet ist, wobei das Stützelement 7 zwischen einer Stützposition P1 und einer Ausweichposition P2 (in den Fig. 16 bis 18 nicht dargestellt) verlagerbar ist und die Feder-Stützvorrichtung 45 eine passive Verlagerungsvorrichtung 21 aufweist, die eine mittels Federkraft in den Verfahrweg der Leitungsaufnahmeeinrichtung 2 hinein bewegbare Schaltvorrichtung in Form eines Schaltkörpers 22 umfasst. Der Schaltkörper 22 kann wie oben in Zusammenhang mit der passiven Verlagerungsvorrichtung 21 des Systems 100 beschrieben ausgebildet sein.

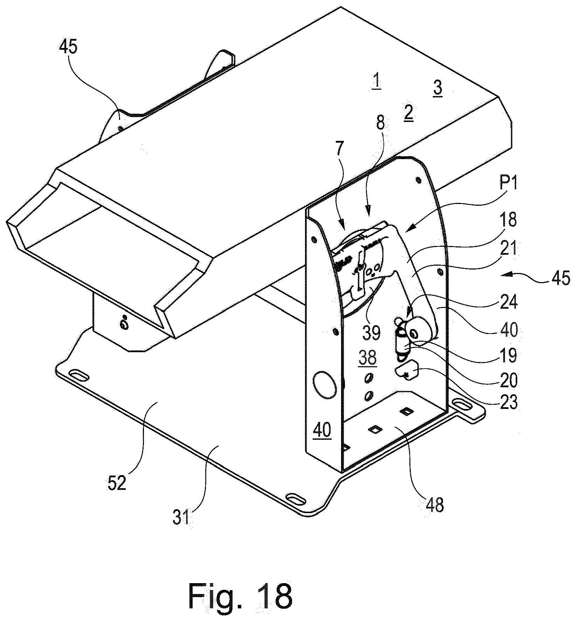

Die Federkraft der passiven Verlagerungsvorrichtung der Feder-Stützvorrichtung 45 wird durch ein als Schraubenfeder 20 ausgebildetes Federelement 19 bewirkt, das zwischen einem Federlager 23 der Feder-Stützvorrichtung 45 und einem mit dem Schwenkarm 18 fest verbundenem weiteren Schwenkarm 24 wirkt. In den Fig. 16 und 18 ist das Federelement 19 der einfacheren Darstellbarkeit halber nicht in das Federlager 23 eingehängt gezeichnet.

Der Schwenkarm 18 und der weitere Schwenkarm 24 bilden zusammen einen Winkelhebel. Das Stützelement 7 der Feder-Stützvorrichtung 45 ist als Stützrolle 8 mit einer Lauffläche 9 ausgebildet.

Die Feder-Stützvorrichtung 45 weist eine Tragstruktur 12 zur Aufnahme von auf die Lauffläche 9 durch das Obertrum 1 vertikal von oben nach unten aufgebrachten Kräften auf.

Die Fig 1, 4 bis 6 und 13 zeigen Feder-Stützvorrichtungen 45, die in Bereichen angeordnet sind, in die der Umlenkbogen 5 nicht gelangen kann, etwa die drei in Fig. 4 links dargestellten Feder-Stützvorrichtungen 45.

Anstelle dieser Feder-Stützvorrichtungen 45 können auch Stützen mit unverlagerbaren Stützelementen vorgesehen sein.

### Bezugszeichenliste

- 100: System
- 200: Anordnung
- 1: Obertrum
- 2: Leitungsaufnahmeeinrichtung
- 3: Energieführungskette
- 4: Untertrum
- 5: Umlenkbogen
- 6: Stützvorrichtung
- 7: Stützelement
- 8: Stützrolle
- 9: Lauffläche
- 10: aktive Verlagerungsvorrichtung
- 11: Aktuator
- 12: Tragstruktur
- 13: Sensorvorrichtung
- 14: Sensorvorrichtung
- 15: Detektionsbereich
- 16: Steuereinheit
- 17: Baugruppe
- 18: Schwenkarm
- 19: Federelement
- 20: Schraubenfeder
- 21: passive Verlagerungsvorrichtung
- 22: Schaltkörper
- 23: Federlager
- 24: weiterer Schwenkarm
- 25: Drehlager
- 26: Kugellager
- 28: Führungsseitenteil
- 29: Kopplungseinrichtung
- 30: Stützeinheit
- 31: Bodentraverse
- 32: Anlaufschräge
- 33: Rotationsmotor
- 34: Signalweg
- 35: Halterung
- 36: Drehachse der Stützrolle
- 37: Ebene
- 38: Führungswand
- 39: Öffnung
- 40: Stützwände
- 41: Abschaltvorgang
- 42: Aktuatoreingang zum Empfang von Steuersignalen
- 43: Steuereinheitseingang zum Empfang von Sensorsignalen
- 44: Führungsfläche
- 45: Feder-Stützvorrichtung
- 46: Schwenkachse des Schwenkarms
- 47: U-förmiger Querschnitt
- 48: Boden der Stützvorrichtung
- 49: Vertikalgleitfläche
- 50: Gleitbügel
- 51: Signalleitung
- 52: Feder-Stützeinheit

- L: Längsrichtung des Systems bzw. der Leitungsaufnahmeeinrichtung
- V: Verlagerungsrichtung des Stützelements

- P1: Stützposition
- P2: Ausweichposition

## Patentansprüche

1. System (100) zur Abstützung eines Obertrums (1) einer Leitungsaufnahmeeinrichtung (2), insbesondere einer Energieführungskette (3),
wobei die Leitungsaufnahmeeinrichtung (2) zum Führen mindestens einer Leitung, wie z.B. eines Kabels, Schlauchs oder dergleichen, zwischen einer ersten Anschlussstelle an einem Festpunkt und einer dazu relativbeweglichen zweiten Anschlussstelle an einem Mitnehmer dient, wobei die Leitungsaufnahmeeinrichtung (2) ein mit der ersten Anschlussstelle verbindbares Untertrum (4) und ein Obertrum (1) aufweist, und das Obertrum (1) mit der zweiten Anschlussstelle verbindbar ist, und wobei das Obertrum (1) und das Untertrum (4) über einen verfahrbaren Umlenkbogen (5) miteinander verbunden sind, und wobei die Leitungsaufnahmeeinrichtung (2) entlang eines Verfahrwegs verfahrbar ist und beim Verfahren das Obertrum (1) oberhalb des Untertrums (4) verläuft,
wobei das System mindestens eine Stützeinheit (30) aufweist, die genau zwei gegenüberliegende Stützvorrichtungen (6) umfasst, wobei die Stützvorrichtungen (6) jeweils ein Stützelement (7) zur Abstützung des Obertrums (1) von unten umfassen und das Stützelement (7) einen Stützkörper mit einer Gleitfläche und/oder eine Stützrolle (8) mit einer Lauffläche (9) aufweist und das Stützelement (7) zwischen einer Stützposition (P1) in der das Stützelement (7) als Abstützung des Obertrums (1) von unten wirken kann, und einer Ausweichposition (P2), in der das Stützelement (7) nicht als Abstützung des Obertrums (1) von unten wirken kann, verlagerbar ist, wobei die Stützvorrichtungen (6) derart gegenüberliegend angeordnet sind, dass sich ihre Stützelemente (7) bei Verlagerung von der Ausweichposition (P2) in die Stützposition (P1) aufeinander zubewegen, und jeweils eine Kopplungseinrichtung (29) aufweisen, die das jeweilige Stützelement (7) mit einem Aktuator koppelt, der eine Verlagerung des Stützelements (7) von der Stützposition (P1) in die Ausweichposition (P2) und umgekehrt bewirkt, dass das System mindestens eine Sensorvorrichtung (13, 14) aufweist, die berührungslos mit der Leitungsaufnahmeeinrichtung (2) zusammenwirkt, und dass das System eingerichtet ist zur Steuerung des Aktuators (11) in Abhängigkeit von Sensorsignalen der mindestens einen berührungslos wirkenden Sensorvorrichtung (13, 14), **dadurch gekennzeichnet, dass** die Stützvorrichtungen (6) jeweils eine eigene aktive Verlagerungsvorrichtung (10) umfassen, die mindestens einen steuerbaren Aktuator (11) aufweist, zur Verlagerung des Stützelements (7) von der Stützposition (P1) in die Ausweichposition (P2) und umgekehrt.

2. System nach Anspruch 1,
**dadurch gekennzeichnet, dass** die Sensorvorrichtung (13, 14) zumindest einen Näherungsschalter, wie z.B. einen optischen Näherungsschalter, einen Lichttaster, einen kapazitiven Näherungsschalter, einen Reed-Schaltkontakte, einen Hall-Geber oder dgl., umfasst.

3. System nach Anspruch 1 oder 2,
**dadurch gekennzeichnet, dass** das System mindestens eine Steuereinheit (16) zur Steuerung des Aktuators (11) in Abhängigkeit von den Sensorsignalen umfasst, wobei insbesondere jedem Aktuator (11) eine eigene Steuereinheit (16) zugeordnet ist, wobei das System dazu eingerichtet ist, eigenständig zu sein oder betrieben zu werden, insbesondere unabhängig von Sensor- und/oder Steuersignalen einer übergeordneten Anlagen- oder Maschinensteuerung, und die Steuereinheit (16) zum Empfang von Sensorsignalen ausgebildet ist und mit der Sensorvorrichtung (13, 14) verbindbar oder verbunden ist.

4. System nach Anspruch 3, wobei das System mindestens zwei Sensorvorrichtungen (13, 14) umfasst,
**dadurch gekennzeichnet,**
**dass** die Steuereinheit (16) jeweils mit zwei Sensorvorrichtungen (13, 14) zusammenwirkt, die auf verschiedenen Seiten einer zumindest in etwa vertikale Ebene (37), in der die Verlagerungsrichtung (V) des Stützelements (7) liegt, angeordnet sind.

5. System nach einem der Ansprüche 1 bis 4,
**dadurch gekennzeichnet, dass** zu zumindest einer Sensorvorrichtung (13, 14) eine, insbesondere baugleiche, weitere Sensorvorrichtung (13, 14) auf der gleichen Seite einer zumindest in etwa vertikalen Ebene (37), in der die Verlagerungsrichtung (V) des Stützelements (7) liegt, angeordnet ist, wobei diese beiden Sensorvorrichtungen (13, 14) durch den Verfahrweg der Leitungsführungseinrichtung (2) voneinander räumlich getrennt gegenüberliegen.

6. System nach einem der Ansprüche 1 bis 5,
**dadurch gekennzeichnet,**
**dass** eine Baugruppe (17) vorgesehen ist, die eine Steuereinheit (16) und zwei Sensorvorrichtungen (13, 14) und eine Stützvorrichtung (6) mit einem Aktuator (11) umfasst, und die Steuereinheit (16) so eingerichtet ist, dass sie den Aktuator (11) ausschließlich in Abhängigkeit der Signale der beiden Sensorvorrichtungen (13, 14) steuert.

7. System nach einem der Ansprüche 1 bis 6,
**dadurch gekennzeichnet, dass** der Aktuator (11) einen elektrischen Antrieb, insbesondere Rotationsmotor (33), vorzugsweise einen Schrittmotor, umfasst.

8. System nach einem der Ansprüche 1 bis 7,
**dadurch gekennzeichnet, dass** die Stützvorrichtung (6) eine Tragstruktur (12) zur Aufnahme von auf die Gleitfläche und/oder die Lauffläche (9) insbesondere durch das Obertrum (1) vertikal von oben nach unten aufgebrachten Kräften aufweist.

9. System nach einem der Ansprüche 1 bis 8, insbesondere nach Anspruch 9,
**dadurch gekennzeichnet, dass** die Stützvorrichtung (6), insbesondere die Tragstruktur (12), eine vertikal feststehende Führungswand (38) aufweist, sowie zwei Stützwände (40) , die mit der Führungswand (38) einen U-förmigen horizontalen Querschnitt (47) bilden, und der Aktuator (11) im Inneren dieses U-förmigen Querschnitts (47) angeordnet ist, insbesondere von "seitlich außen" zugänglich.

10. System nach einem der Ansprüche 1 bis 9, insbesondere nach Anspruch 9 oder 10, **dadurch ge- kennzeichnet**, **dass** die Stützvorrichtung (6) mindestens einen mittels eines Drehlagers (25) schwenkbar gelagerten Schwenkarm (18) umfasst, an welchem das Stützelement (7) angeordnet ist, wobei der Schwenkarm (18) mit dem Aktuator zur Betätigung der Schwenkbewegung wirkverbunden ist und wobei der Schwenkarm (18) insbesondere mittels des Drehlagers (25) schwenkbar an der Tragstruktur gelagert ist.

11. System nach Anspruch 10, **dadurch ge- kennzeichnet**, **dass** das Drehlager (25) ein Kugellager (26) umfasst.

12. System nach einem der Ansprüche 10 oder 11,
**dadurch gekennzeichnet, dass** die Verlagerungsvorrichtung (10) zusätzlich zum Aktuator ein Federelement (19) umfasst, das entgegen der Richtung einer durch den Aktuator bewirkten Bewegung wirkt, wobei das Federelement bevorzugt eine Schraubenfeder (20) umfasst, die zwischen einem Federlager (23) der Stützvorrichtung (6) und dem Schwenkarm (18) oder einem mit dem Schwenkarm (18) fest verbundenem weiteren Schwenkarm (24) wirkt.

13. System nach einem der Ansprüche 1 bis 12,
**dadurch gekennzeichnet**,
d a s s zusätzlich eine passive Verlagerungsvorrichtung (21) vorgesehen ist, die eine in den Verfahrweg der Leitungsaufnahmeeinrichtung (2) hinein bewegbare Schaltvorrichtung in Form eines Schaltkörpers (22) umfasst, welcher dazu ausgebildet ist mechanisch mit dem Umlenkbogen zusammenwirken zu können zur Verlagerung des Stützelements (7) von der Stützposition (P1) in die Ausweichposition (P2).

14. System nach Anspruch 13,
**dadurch gekennzeichnet, dass** der Schaltkörper (22) jeweils zwei entgegengesetzte Anlaufflächen, insbesondere Anlaufschrägen (32) aufweist, die mit dem Umlenkbogen (5), insbesondere im Falle eines Versagens der aktiven Verlagerungsvorrichtung (10), zusammenwirken können, um den Schaltkörper (22) aus dem Verfahrweg der Leitungsaufnahmeeinrichtung (2) heraus zu bewegen, wobei der Schaltkörper (22) mit dem Stützelement (7) so gekoppelt ist, dass dieses von seiner Stützposition (P1) in die Ausweichposition (P2) bewegbar ist und wobei der Schaltkörper (22) durch seine Schwerkraft und/oder durch Federkraft in den Verfahrweg der Leitungsaufnahmeeinrichtung (2) hinein bewegbar ist.

15. System nach einem der Ansprüche 1 bis 14,
**dadurch gekennzeichnet,**
**dass** mindestens zwei Stützeinheiten (30) vorgesehen sind und das System zwei gegenüberliegende Führungsseitenteile (28) umfasst, zwischen denen mindestens eines der Trume (1, 4) aufgenommen werden kann, und sich die zwei gegenüberliegenden Führungsseitenteile (28) von einer Stützeinheit (30) bis zu einer anderen Stützeinheit (30) erstrecken.

## Claims

1. A system (100) for supporting an upper run (1) of a line-receiving apparatus (2), in particular an energy guide chain (3),
wherein the line-receiving apparatus (2) is used for guiding at least one line, such as for example a cable, hose or the like, between a first connection point at a fixed point and a second connection point, which is mobile relative thereto, at a moving end, wherein the line-receiving apparatus (2) has an upper run (1), and a lower run (4) connectable to the first connection point, the upper run (1) being connectable to the second connection point, and wherein the upper run (1) and the lower run (4) are connected to one another via a displaceable deflection arc (5), and wherein the line-receiving apparatus (2) is displaceable along a travel path and, on displacement, the upper run (1) runs above the lower run (4),
wherein the system has at least one support unit (30) which comprises precisely two opposite support devices (6), wherein the support devices (6) each comprise a support element (7) for supporting the upper run (1) from below and the support element (7) has a support body with a sliding surface and/or a support roller (8) with a running surface (9) and the support element (7) is displaceable between a supporting position (P1), in which the support element (7) can act as a support for the upper run (1) from below, and a retracted position (P2), in which the support element (7) cannot act as a support for the upper run (1) from below, wherein the support devices (6) are arranged opposite one another such that their support elements (7), when displaced from the retracted position (P2) into the supporting position (P1), move toward one another, and each have a coupling apparatus (29) which couples the respective support element (7) to an actuator, which causes displacement of the support element (7) from the supporting position (P1) to the retracted position (P2) and *vice versa*, the system comprising at least one sensor device (13, 14), which interacts contactlessly with the line-receiving apparatus (2), and the system being configured to control the actuator (11) as a function of sensor signals from the at least one contactlessly acting sensor device (13, 14), **characterized in that**
the support devices (6) each comprise their own active displacement device (10), which has at least one controllable actuator (11) for displacing the support element (7) from the supporting position (P1) into the retracted position (P2) and *vice versa.*

2. The system according to Claim 1,
**characterized in that**
the sensor device (13, 14) comprises at least one proximity switch, such as for example an optical proximity switch, a light scanner, a capacitive proximity switch, a reed switching contact, a Hall-effect sensor or the like.

3. The system according to Claim 1 or 2,
**characterized in that**
the system comprises at least one control unit (16) for controlling the actuator (11) as a function of the sensor signals, wherein each actuator (11) is in particular associated with its own control unit (16), wherein the system is configured to be self-contained or operated in self-contained manner, in particular independently of sensor and/or control signals from a higher-level plant or machine controller, and the control unit (16) is configured to receive sensor signals and is connectable or connected to sensor device (13, 14).

4. The system according to Claim 3, wherein the system comprises at least two sensor devices (13, 14),
**characterized in that**
the control unit (16) in each case interacts with two sensor devices (13, 14) which are arranged on different sides of an at least approximately vertical plane (37) in which the direction of displacement (V) of the support element (7) is located.

5. The system according to one of Claims 1 to 4,
**characterized in that**,
in addition to at least one sensor device (13, 14), an, in particular identically constructed, further sensor device (13, 14) is arranged on the same side of an at least approximately vertical plane (37) in which the direction of displacement (V) of the support element (7) is located, wherein these two sensor devices (13, 14), spatially separated from one another by the travel path of the line guide apparatus (2), are located opposite one another.

6. The system according to one of Claims 1 to 5,
**characterized in that**
an assembly (17) is provided which comprises a control unit (16) and two sensor devices (13, 14) and a support device (6) with an actuator (11), and the control unit (16) is configured such that it controls the actuator (11) exclusively as a function of the signals from the two sensor devices (13, 14).

7. The system according to one of Claims 1 to 6,
**characterized in that**
the actuator (11) comprises an electrical drive, in particular rotary motor (33), preferably a stepping motor.

8. The system according to one of Claims 1 to 7,
**characterized in that**
the support device (6) has a load-bearing structure (12) for absorbing forces applied vertically downward from above, in particular by the upper run (1), onto the sliding surface and/or the running surface (9).

9. The system according to one of Claims 1 to 8, in particular according to Claim 9,
**characterized in that**
the support device (6), in particular the load-bearing structure (12), has a vertically fixed guide wall (38) and two support walls (40) which form a U-shaped horizontal cross-section (47) with the guide wall (38), and the actuator (11) is arranged in the interior of this U-shaped cross-section (47), in particular is accessible "externally from the side".

10. The system according to one of Claims 1 to 9, in particular according to Claim 9 or Claim 10,
**characterized in that**
the support device (6) comprises at least one swivel arm (18) swivelably mounted by way of a pivot bearing (25), on which swivel arm the support element (7) is arranged, wherein the swivel arm (18) is operatively connected to the actuator for actuation of the swivel movement and wherein the swivel arm (18) is swivelably mounted on the load-bearing structure in particular by way of the pivot bearing (25).

11. The system according to Claim 10,
**characterized in that**
the pivot bearing (25) comprises a ball bearing (26).

12. The system according to one of Claims 10 or 11,
**characterized in that**,
in addition to the actuator, the displacement device (10) comprises a spring element (19) which acts contrary to the direction of a movement brought about by the actuator, wherein the spring element preferably comprises a helical spring (20) which acts between a spring bearing (23) of the support device (6) and the swivel arm (18) or a further swivel arm (24) firmly connected to the swivel arm (18).

13. The system according to one of Claims 1 to 12,
**characterized in that**
a passive displacement device (21) is additionally provided which comprises a switching device in the form of a switch body (22) which is movable into the travel path of the line-receiving apparatus (2), which switch body (22) is configured to be capable of interacting mechanically with the deflection arc to displace the support element (7) from the supporting position (P1) into the retracted position (P2).

14. The system according to Claim 13,
**characterized in that**
the switch body (22) has in each case two opposing run-on surfaces, in particular run-on bevels (32), which can interact with the deflection arc (5), in particular in the event of failure of the active displacement device (10), in order to move the switch body (22) out of the travel path of the line-receiving apparatus (2), wherein the switch body (22) is coupled to the support element (7) in such a way that the latter is movable from its supporting position (P1) into the retracted position (P2) and wherein the switch body (22) is movable into the travel path of the line-receiving apparatus (2) under the effect of gravity and/or by spring force.

15. The system according to one of Claims 1 to 14,
**characterized in that**
at least two support units (30) are provided and the system comprises two opposing side guide parts (28) between which at least one of the runs (1, 4) can be received, and the two opposing side guide parts (28) extend from one support unit (30) to another support unit (30).

## Revendications

1. Système (100) pour supporter un brin supérieur (1) d'un dispositif de réception de câbles (2), en particulier d'une chaîne porte-câbles (3),
le dispositif de réception de câbles (2) servant à guider au moins une conduite, tel qu'un câble, un tuyau ou similaire, entre un premier point de raccordement situé en un point fixe et un deuxième point de raccordement mobile par rapport à celui-ci, situé sur un entraîneur, le dispositif de réception de câbles (2) comportant un brin inférieur (4) pouvant être relié au premier point de raccordement et un brin supérieur (1), et le brin supérieur (1) pouvant être relié au deuxième point de raccordement, et le brin supérieur (1) et le brin inférieur (4) étant reliés l'un à l'autre par l'intermédiaire d'un coude de renvoi mobile (5), et le dispositif de réception de câbles (2) pouvant se déplacer le long d'une course de déplacement et, lors du déplacement, le brin supérieur (1) passe au-dessus du brin inférieur (4),
le système comportant au moins une unité de support (30) qui comprend exactement deux dispositifs de support (6) opposés, les dispositifs de support (6) comportant chacun un élément de support (7) destiné à supporter le brin supérieur (1) par le bas, et l'élément de support (7) comportant un corps de support avec une surface de glissement et/ou un galet de support (8) avec une surface de roulement (9), et l'élément de support (7) pouvant être déplacé entre une position de support (P1), dans laquelle l'élément de support (7) peut agir comme support du brin supérieur (1) par le bas, et une position d'évitement (P2), dans laquelle l'élément de support (7) ne peut pas servir de support au brin supérieur (1) par le bas, les dispositifs de support (6) étant disposés en vis-à-vis de telle sorte que leurs éléments de support (7), lors du déplacement de la position d'évitement (P2) vers la position de support (P1), avancent l'un vers l'autre et comportent chacun un dispositif de couplage (29) qui couple l'élément de support (7) correspondant à un actionneur qui provoque un déplacement de l'élément de support (7) de la position de support (P1) vers la position d'évitement (P2) et inversement, le système comportant au moins un dispositif capteur (13, 14) qui coopère sans contact avec le dispositif de réception de câbles (2), et le système étant agencé pour commander l'actionneur (11) en fonction des signaux de capteur provenant dudit au moins un dispositif de capteur sans contact (13, 14), **caractérisé en ce que** les dispositifs de support (6) comprennent chacun un dispositif de déplacement actif (10) propre, qui comporte au moins un actionneur commandable (11), pour déplacer l'élément de support (7) de la position de support (P1) vers la position d'évitement (P2) et inversement.

2. Système selon la revendication 1,
**caractérisé en ce que** le dispositif capteur (13, 14) comprend au moins un capteur de proximité, tel qu'un capteur de proximité optique, un capteur photoélectrique, un capteur de proximité capacitif, un contact Reed, un capteur à effet Hall ou similaire.

3. Système selon la revendication 1 ou 2,
**caractérisé en ce que** le système comprend au moins une unité de commande (16) pour commander l'actionneur (11) en fonction des signaux de capteur, une unité de commande (16) propre étant notamment associée à chaque actionneur (11), le système étant conçu pour être autonome ou pour fonctionner de manière autonome, en particulier indépendamment des signaux de capteur et/ou d'un dispositif de commande de système ou de machine de niveau supérieur, et l'unité de commande (16) est conçue pour recevoir des signaux de capteur et peut être connectée ou est connectée au dispositif capteur (13, 14).

4. Système selon la revendication 3, le système comprenant au moins deux dispositifs de capteur (13, 14), **caractérisé en ce que** l'unité de commande (16) coopère respectivement avec deux dispositifs capteur (13, 14) qui sont disposés de part et d'autre d'un plan (37) au moins approximativement vertical, dans lequel se trouve la direction de déplacement (V) de l'élément de support (7).

5. Système selon l'une quelconque des revendications 1 à 4, **caractérisé en ce qu'**un autre dispositif capteur (13, 14), notamment de construction identique, est disposé en plus du dispositif capteur (13, 14) du même côté d'un plan (37) au moins approximativement vertical dans lequel se trouve la direction de déplacement (V) de l'élément de support (7), ces deux dispositifs capteur (13, 14) étant situés face à face, séparés l'un de l'autre dans l'espace par la course de déplacement du dispositif de guidage de conduite (2).

6. Système selon l'une quelconque des revendications 1 à 5, **caractérisé en ce qu'**il est prévu un module (17) qui comprend une unité de commande (16) et deux dispositifs capteur (13, 14) et un dispositif de support (6) avec un actionneur (11), et l'unité de commande (16) est agencée de manière à commander l'actionneur (11) exclusivement en fonction des signaux des deux dispositifs capteur (13, 14).

7. Système selon l'une quelconque des revendications 1 à 6, **caractérisé en ce que** l'actionneur (11) comprend un entraînement électrique, en particulier un moteur rotatif (33), de préférence un moteur pas à pas.

8. Système selon l'une quelconque des revendications 1 à 7, **caractérisé en ce que** le dispositif de support (6) comporte une structure porteuse (12) destinée à absorber les forces exercées verticalement de haut en bas sur la surface de glissement et/ou la surface de roulement (9), notamment par le brin supérieur (1).

9. Système selon l'une quelconque des revendications 1 à 8, en particulier selon la revendication 9,
**caractérisé en ce que** le dispositif de support (6), en particulier la structure porteuse (12), comporte une paroi de guidage (38) fixe verticalement, ainsi que deux parois de support (40) qui forment avec la paroi de guidage (38) une section transversale horizontale en forme de U (47), et l'actionneur (11) est disposé à l'intérieur de cette section transversale en forme de U (47), accessible en particulier "par le côté latéralement extérieur".

10. Système selon l'une quelconque des revendications 1 à 9, en particulier selon la revendication 9 ou 10, **caractérisé en ce que** le dispositif de support (6) comprend au moins un bras pivotant (18) monté de manière pivotante au moyen d'un palier pivotant (25), sur lequel est disposé l'élément de support (7), le bras pivotant (18) étant relié de manière fonctionnelle à l'actionneur pour l'actionnement du mouvement de pivotement et le bras pivotant (18) étant monté de manière pivotante sur la structure porteuse, notamment au moyen du palier pivotant (25).

11. Système selon la revendication 10, **caractérisé en ce que** le palier pivotant (25) comprend un roulement à billes (26).

12. Système selon l'une quelconque des revendications 10 ou 11, **caractérisé en ce que** le dispositif de déplacement (10) comprend, en plus de l'actionneur, un élément de ressort (19) qui agit à l'encontre de la direction d'un mouvement provoqué par l'actionneur, l'élément de ressort comprenant de préférence un ressort hélicoïdal (20) qui agit entre un support de ressort (23) du dispositif de support (6) et le bras pivotant (18) ou un autre bras pivotant (24) solidaire du bras pivotant (18).

13. Système selon l'une quelconque des revendications 1 à 12, **caractérisé en ce qu'**il est en outre prévu un dispositif de déplacement passif (21) qui comprend un dispositif de commutation, qui peut entrer dans la trajectoire de déplacement du dispositif de réception de câbles (2), sous la forme d'un corps de commutation (22) conçu pour pouvoir coopérer mécaniquement avec le coude de renvoi afin de déplacer l'élément de support (7) de la position de support (P1) vers la position d'évitement (P2).

14. Système selon la revendication 13, **caractérisé en ce que** le corps de commutation (22) présente deux surfaces d'approche, en particulier des pentes d'approche (32), qui peuvent coopérer avec le coude de renvoi (5), en particulier en cas de défaillance du dispositif de déplacement actif (10), afin de déplacer le corps de commutation (22) hors de la trajectoire de déplacement du dispositif de réception de câbles (2), le corps de commutation (22) étant (7) couplé à l'élément de support (7) de telle sorte que celui-ci puisse être déplacé de sa position d'appui (P1) vers la position d'évitement (P2) et le corps de commutation (22) pouvant être déplacé dans la trajectoire de déplacement du dispositif de réception de conduite (2) sous l'effet de sa propre gravité et/ou d'une force élastique.

15. Système selon l'une quelconque des revendications 1 à 14, **caractérisé en ce qu'**au moins deux unités de support (30) sont prévues et que le système comprend deux parties latérales de guidage opposées (28) entre lesquelles au moins l'un des brins (1, 4) peut être logé, et les deux parties latérales de guidage opposées (28) s'étendent d'une unité de support (30) à une autre unité de support (30).
